(19) Europäisches Patentamt
European Patent Office
Office européen des brevets

(11) **EP 4 741 453 A1**

(12) **EUROPEAN PATENT APPLICATION**
published in accordance with Art. 153(4) EPC

(43) Date of publication:
**13.05.2026 Bulletin 2026/20**

(21) Application number: 24839296.1

(22) Date of filing: **14.05.2024**

(51) International Patent Classification (IPC):
*C08J 11/16* [(2006.01)]  *C08F 8/50* [(2006.01)]
*C08J 11/22* [(2006.01)]

(52) Cooperative Patent Classification (CPC):
C08F 8/50; C08J 11/16; C08J 11/22

(86) International application number:
**PCT/JP2024/017722**

(87) International publication number:
**WO 2025/013398 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 07.07.2023 JP 2023112534

(71) Applicant: Nippon Shokubai Co., Ltd.
Osaka-shi, Osaka 541-0043 (JP)

(72) Inventors:
• MATSUI, Daisuke
Himeji-shi, Hyogo 671-1282 (JP)
• NOGI, Kozo
Himeji-shi, Hyogo 671-1282 (JP)
• FUJINO, Shin-ichi
Himeji-shi, Hyogo 671-1282 (JP)
• TORII, Kazushi
Himeji-shi, Hyogo 671-1282 (JP)
• ENOKIDA, Yusuke
Himeji-shi, Hyogo 671-1282 (JP)
• KOBAYASHI, Nobuhiro
Himeji-shi, Hyogo 671-1282 (JP)
• ISHIZAKI, Kunihiko
Himeji-shi, Hyogo 671-1282 (JP)

(74) Representative: Schön, Christoph
Dr. Schön, Neymeyr & Partner mbB
Bavariaring 26
80336 München (DE)

(54) **METHOD FOR PRODUCING SOLUBILIZED POLYMER-CONTAINING MATERIAL, AND METHOD FOR PRODUCING WATER-ABSORBENT RESIN USING SOLUBILIZED POLYMER-CONTAINING MATERIAL AS PORTION OF RAW MATERIAL**

(57) Provided is a method for producing a solubilized polymer-containing material that makes it possible to efficiently decompose water-absorbent resins to efficiently produce the solubilized polymer-containing material, and provide a method for producing a water-absorbent resin in which a portion of the solubilized polymer-containing material is used as a raw material. The method for producing a solubilized polymer-containing material includes a heat treatment step of heat-treating a mixture (B) containing a water-absorbent resin (A), water, and a peroxide under conditions satisfying the following i) and ii), in which a mass average molecular weight (Mw) of a water-soluble content of a solubilized polymer-containing material (C) obtained in the heat treatment step is from 30000 to 1000000: i) a solid content concentration of the mixture (B) is 60 mass% or greater, and ii) a temperature of the heat treatment is 60°C or higher.

EP 4 741 453 A1

## Description

Technical Field

The present invention relates to a method for producing a solubilized polymer-containing material and a method for producing a water-absorbent resin using the solubilized polymer-containing material as a portion of the raw material.

Background Art

Water-absorbent resins are widely used as water absorbents in absorbent articles such as disposable diapers, sanitary napkins, and incontinence pads from the viewpoint of body fluid absorption.

Absorbent articles are generally disposable, but in recent years, interest in recycling absorbent articles has increased due to an increase in environmental awareness. As a technique for recycling water-absorbent resins used in absorbent articles, a method has been developed in which a water-absorbent resin is decomposed and solubilized, and the solubilized polymer is then reused. Various techniques are known as methods for decomposing and solubilizing water-absorbent resins, such as a technique of solubilizing a water-absorbent resin by heat-treating a mixture of a water-absorbent resin and pulp in the presence of an oxidizing agent (Patent Document 1), a technique of solubilizing a water-absorbent resin using a reducing agent and a transition metal ion (Patent Document 2), and a technique of decomposing a water-absorbent resin by irradiating the water-absorbent resin with microwaves at 200°C in the presence of hydrogen peroxide (Patent Document 3).

Moreover, as a method for using a solubilized polymer obtained by decomposing a water-absorbent resin, a technique of adding a solubilized polymer in a process of producing a water-absorbent resin is known (Patent Document 4).

Citation List

Patent Document

Patent Document 1: Japanese Unexamined Patent Application Publication "JP H04-317785 A"
Patent Document 2: Japanese Unexamined Patent Application Publication "JP 2019-131789 A"
Patent Document 3: European Patent Application Publication No. EP 3783056 A1
Patent Document 4: WO 2020/213298

Summary of Invention

Technical Problem

However, the above-mentioned techniques for producing a solubilized polymer are problematic in that all involve a solubilization treatment at a low solid content concentration, and the solid content of the obtained solubilized polymer is small relative to the total treatment amount, and thus production efficiency is low.

In addition, since the obtained solubilized polymer also has a low solid content concentration (< 5 mass%), an aqueous solution containing the solubilized polymer is freeze-dried to increase the solid content concentration and then added to the production process for producing a water-absorbent resin. Therefore, another issue is that a large amount of energy is required for drying in order to reuse the solubilized polymer, and thus the existing techniques are extremely inefficient in terms of energy.

Moreover, when a water-absorbent resin is excessively decomposed in the production of a solubilized polymer, the molecular weight of the solubilized polymer generally decreases. Therefore, when the solubilized polymer is to be reused as a part of the raw materials of a water-absorbent resin, and particularly when crosslinking is to be formed between the solubilized polymers or between the solubilized polymer and other molecules, an issue arises in that the crosslinking efficiency is deteriorated, and the process is not economical.

Thus, a demand exists for a method for producing, with higher production efficiency, a solubilized polymer-containing material that contains a solubilized polymer having a high molecular weight. Hence, an object of one aspect of the present invention is to provide a method for producing a solubilized polymer-containing material that contains a high molecular weight solubilized polymer, the production method thereof allowing the efficient decomposition of a water-absorbent resin, and to provide an energy-efficient method for producing a water-absorbent resin, the method thereof using, as a portion of the raw materials, the solubilized polymer-containing material obtained by the production method and containing a solubilized polymer having a high molecular weight.

Solution to Problem

That is, in order to solve the issues described above, one aspect of the present invention includes the following configurations.

[1] A method for producing a solubilized polymer-containing material, the method including a heat treatment step of heat-treating a mixture (B) containing a water-absorbent resin (A), water, and a peroxide under conditions satisfying i) and ii) set forth below:

i) a solid content concentration of the mixture (B) is 60 mass% or greater, and
ii) a temperature of the heat treatment is 60°C or higher

wherein a mass average molecular weight (Mw) of a water-soluble content of a solubilized polymer-containing material (C) obtained in the heat treatment step is from 30000 to 1000000.
[2] The production method according to [1], wherein in the heat treatment step, a dew point of a gas phase portion in a heat treatment device is 30°C or higher.
[3] The production method according to [1] or [2], wherein in the heat treatment step, stirring is performed.
[4] The production method according to any of [1] to [3], wherein the peroxide is a peroxide represented by General Formula (1) set forth below:

$$R\text{-O-OH} \qquad (1)$$

where in General Formula (1), R is a hydrogen atom or an aliphatic substituent.
[5] The production method according to any of [1] to [4], wherein the peroxide is hydrogen peroxide.
[6] The production method according to any of [1] to [5], wherein Mw/Mn of the water-soluble content of the solubilized polymer-containing material (C) is 6.0 or less.
[7] The production method according to any of [1] to [6], wherein an amount of increase in the water-soluble content as calculated by Formula 1) set forth below is 5 mass% or greater:

$$\text{water-soluble content increase amount (mass\%)} = (\text{Extr. C}) - (\text{Extr. A}) \quad \cdots \quad \text{Formula 1)}$$

where,

Extr. A is an amount of a water-soluble content of the water-absorbent resin (A), and
Extr. C is an amount of the water-soluble content of the solubilized polymer-containing material (C).

[8] The production method according to any of [1] to [7], wherein a solid content concentration of the mixture (B) is 80 mass% or greater.
[9] The production method according to any of [1] to [8], wherein in the heat treatment step, a temperature of the heat treatment is 105°C or higher.
[10] The production method according to any of [1] to [9], wherein in the method for producing a solubilized polymer-containing material, a solubilized polymer is not generated by electromagnetic waves.
[11] A method for producing a water-absorbent resin, the method including an addition step of adding the solubilized polymer-containing material (C) obtained by the production method described in any of [1] to [10].
[12] A solubilized polymer-containing material, which is a solubilized polymer-containing material (C) obtained by heat-treating a mixture (B) containing a water-absorbent resin (A), water, and a peroxide, wherein

a solid content concentration of the solubilized polymer-containing material (C) is 60 mass% or greater,
based on the solid content contained in the solubilized polymer-containing material (C) being defined as 100 parts by mass, a proportion of an amount of water-soluble content that can be dissolved in water is 30 parts by mass or greater, and
a mass average molecular weight (Mw) of the water-soluble content of the solubilized polymer-containing material (C) is from 30000 to 1000000.

[13] The solubilized polymer-containing material according to [12], wherein Mw/Mn of the water-soluble content of the solubilized polymer-containing material (C) is 6.0 or less.

[14] The solubilized polymer-containing material according to [12] or [13], wherein the solubilized polymer-containing material (C) is not obtained by use of electromagnetic waves.

[15] The solubilized polymer-containing material according to any of [12] to [14], wherein a yellowness index (YI) value of the solubilized polymer-containing material (C) is 20 or less.

Advantageous Effects of Invention

According to an aspect of the present invention, a method for producing a solubilized polymer-containing material, which can efficiently decompose a water-absorbent resin, and an energy-efficient method for producing a water-absorbent resin using the solubilized polymer-containing material as a portion of the raw materials can be provided.

Description of Embodiments

Hereinafter, embodiments of the present invention will be described in detail. The present invention is not limited to the following embodiments, and various modifications can be made within the described scope. Moreover, embodiments and examples obtained by appropriately combining technical means disclosed in the different embodiments and examples are also included in the technical scope of the present invention. In the present specification, a numerical range described as "from A to B" means "A or more and B or less" unless otherwise specified. Moreover, the term "(meth)acrylic" means "acrylic and/or methacrylic". Furthermore, the mass of the water-absorbent resin and the like is a numeric value in terms of solid content unless otherwise specified.

[1] Method for Producing Solubilized Polymer-Containing Material

As a result of studies conducted in view of the above issues, the present inventors discovered that a solubilized polymer-containing material can be obtained by using a peroxide as a decomposition agent even when a mixture containing a water-absorbent resin is configured with a high solid content concentration ($\geq$ 60 mass%). The present inventors also discovered that because the obtained solubilized polymer-containing material has a high solid content concentration, the solubilized polymer-containing material is efficient in terms of energy when reused, the mass average molecular weight of the water-soluble content of the obtained solubilized polymer-containing material is high, and the material is also excellent in terms of ease of reuse.

That is, a method for producing a solubilized polymer-containing material according to one embodiment of the present invention includes a heat treatment step of subjecting a mixture (B) containing a water-absorbent resin (A), water, and a peroxide to a heat treatment under conditions satisfying the following i) and ii).

    i) A solid content concentration of the mixture is 60 mass% or greater, and
    ii) a temperature of the heat treatment is 60°C or higher.

(1-1) Heat Treatment Step

Solubilized Polymer-Containing Material

In the present specification, the term "solubilized polymer-containing material" means a composition containing a polymer obtained by decomposing a water-absorbent resin, which is water-swellable and water-insoluble, and solubilizing the decomposed resin in water. In the method for producing a solubilized polymer-containing material according to one embodiment of the present invention, a mixture containing a water-absorbent resin, water, and a peroxide is subjected to a heat treatment under predetermined conditions, and thereby the water-absorbent resin is decomposed to form a solubilized polymer-containing material. In other words, the water-absorbent resin is decomposed to form a solubilized polymer, and a solubilized polymer-containing material, which is a composition containing the solubilized polymer, is obtained.

More specifically, in one embodiment of the present invention, a mixture containing a water-absorbent resin, water, and a peroxide is subjected to a heat treatment under predetermined conditions, and thereby a solubilized polymer-containing material that contains a solubilized polymer and water is obtained. All of the water-absorbent resins contained in the solubilized polymer-containing material may be solubilized in water, or the solubilized polymer-containing material may contain a water-absorbent resin that is partially unsolubilized.

Whether a solubilized polymer-containing material is obtained can be determined by the following method. An example of the above-mentioned determination method is an appearance-based method in which a solubilized polymer-containing material is dissolved or dispersed in a large excess of water, and if no undissolved residue is observed in the aqueous solution (or aqueous dispersion) and the decomposition product of the water-absorbent resin is dissolved in water, a determination is made that a solubilized polymer-containing material has been obtained. Another example of the determination method is a method in which a solubilized polymer-containing material is dissolved or dispersed in a large excess of water, and even if a swollen material of the water-absorbent resin that is partially undissolved in water remains in the aqueous solution (or aqueous dispersion), if the swollen material is reduced as compared with that before the heat treatment, a determination is made that the water-absorbent resin was partially solubilized and a solubilized polymer-containing material was obtained.

Water-Absorbent Resin

In the present specification, the term "water-absorbent resin" means a water-swellable, water-insoluble polymer gelling agent and is a commonly used water-absorbent resin having a fluid retention capacity of from 10 to 1000 times its volume. More specifically, the water-absorbent resin prior to absorbing a liquid to be absorbed preferably satisfies, in terms of "water-swellability", the physical property of Centrifuge Retention Capacity (CRC) as defined by ERT441.2-02 of 5 g/g or greater, and preferably satisfies, in terms of "water-insolubility", the physical property of Extractables (Ext), meaning water-soluble content, as defined by ERT470.2-02 of from 0 to 50 mass%.

Specific examples of the water-absorbent resin include a polyacrylic acid (salt)-based resin, a polysulfonic acid (salt)-based resin, a maleic anhydride (salt)-based resin, a polyacrylamide-based resin, a polyvinyl alcohol-based resin, a polyethylene oxide-based resin, a polyaspartic acid (salt)-based resin, a polyglutamic acid (salt)-based resin, a polyalginic acid (salt)-based resin, a starch-based resin, a cellulose-based resin, a (meth)acrylate crosslinked polymer, a saponified crosslinked product of a (meth)acrylate-vinyl acetate copolymer, a starch-acrylate graft polymer, and crosslinked products thereof.

In the present specification, the term "water-absorbent resin" is not limited to embodiments in which the entire amount thereof (100 mass%) consists of the above-described water-absorbent resin only, and the term "water-absorbent resin" may be a water-absorbent resin composition that contains an additive and/or the like.

In addition, the "water-absorbent resin" in the present specification may be a water-absorbent resin recovered from a used absorbent article, a waste product in a process of producing a water-absorbent resin, or a mixture of two or more of these. By adding a solubilized polymer-containing material, which contains a solubilized polymer obtained by decomposing and solubilizing these water-absorbent resins in a process of producing a water-absorbent resin to reuse the solubilized polymer-containing material, a water-absorbent resin that was discarded in the past can be effectively used again. Such an effect contributes to the achievement of, for example, "Responsible Consumption and Production", which is Goal 12 of the Sustainable Development Goals (SDGs) advocated by the United Nations.

Water-absorbent resins recovered from used absorbent articles may include water-absorbent resins in the form contained in the used absorbent articles. The water-absorbent resin in a form contained in a used absorbent article may be in a state of a hydrogel, inside of which an aqueous liquid such as urine or blood is incorporated. Thus, the water-absorbent resin may contain a water-absorbent resin in a hydrogel state. Alternatively, the water-absorbent resin recovered from a used absorbent article may be a water-absorbent resin that was obtained by washing and/or drying a water-absorbent resin contained in a used absorbent article. Here, the method for washing and drying the water-absorbent resin in the form contained in a used absorbent article is not particularly limited, and a method used in the relevant field can be appropriately adopted. In addition, a water-absorbent resin obtained by washing and/or drying a water-absorbent resin contained in a used absorbent article may be separated from the other constituent materials (such as pulp and plastic, for example) other than the water-absorbent resin contained in the used absorbent article, or may contain the other constituent materials. The water-absorbent resin obtained by washing and drying a water-absorbent resin in the form contained in the used absorbent article may be in a state of a hydrogel or a powder.

Examples of waste products occurring in the process of producing a water-absorbent resin include a fine powder of the water-absorbent resin generated in the production process of the water-absorbent resin, out-of-specification products, and waste products containing the water-absorbent resin generated in the production process. These waste products may be in a state of a hydrogel or a powder.

Here, the term "used absorbent article" refers to, for example, a used sanitary material that has been used by a consumer and has absorbed body fluids such as urine and blood. Examples of the sanitary materials include disposable diapers, sanitary napkins, adult incontinence products (incontinence pads), and pet sheets.

Water

The type of water used in the heat treatment step is not particularly limited, and for example, deionized water, tap water, or distilled water can be used. In the case of a water-absorbent resin contained in a used absorbent article, the water used in this step may contain an absorbed liquid such as urine and blood. In addition, for example, when the water-absorbent resin is in a state of a hydrogel, such as when the water-absorbent resin is contained in a used water-absorbent article, or when the water-absorbent resin is a hydrogel generated in a process of producing the water-absorbent resin, the moisture absorbed in the water-absorbent resin may be used as is.

The amount of water used in the heat treatment step in relation to 100 parts by mass of the water-absorbent resin is preferably from 1 part by mass to 43 parts by mass, more preferably from 2 parts by mass to 33 parts by mass, still more preferably from 4 parts by mass to 25 parts by mass, and particularly preferably from 5 parts by mass to 17 parts by mass. The amount of water is preferably 1 part by mass or more because at such an amount, the decomposability of the water-absorbent resin is sufficiently high. Further, the amount of water of 43 parts by mass or less is advantageous in that the solid content of the obtained solubilized polymer-containing material in relation to the total treatment amount is sufficiently high, and the production efficiency is high.

Peroxide

The peroxide used in the heat treatment step is not particularly limited, and examples thereof include hydrogen peroxide, alkyl hydroperoxide, benzoyl peroxide, di-t-butyl peroxide, cumene hydroperoxide, and succinic acid peroxide.

The peroxide is more preferably a peroxide represented by the following General Formula (1):

$$R\text{-}O\text{-}OH \qquad (1)$$

where in General Formula (1), R is a hydrogen atom or an aliphatic substituent.

Among such peroxides, the peroxide is more preferably hydrogen peroxide in which R in General Formula (1) is a hydrogen atom, an alkyl hydroperoxide, which is a peroxide in which R in General Formula (1) is an alkyl group, or a combination of two or more of these peroxides. The peroxide is more preferably hydrogen peroxide.

The usage amount of the peroxide in the heat treatment step is, in relation to 100 parts by mass of the water-absorbent resin, preferably from 0.01 parts by mass to 10 parts by mass, more preferably from 0.05 parts by mass to 8 parts by mass, and still more preferably from 0.1 parts by mass to 5 parts by mass. The amount of the peroxide is preferably 0.01 parts by mass or more because at such an amount, the water-absorbent resin is sufficiently decomposable. Moreover, the amount of the peroxide is preferably 10 parts by mass or less because at such an amount, discoloration of the solubilized polymer-containing material is reduced.

Solid Content Concentration of Mixture

In one embodiment of the present invention, the solid content concentration of the mixture containing the water-absorbent resin, water, and the peroxide is 60 mass% or greater, more preferably 70 mass% or greater, and even more preferably 80 mass% or greater. The upper limit of the solid content concentration of the mixture is preferably 98 mass% or less, and more preferably 95 mass% or less. When the solid content concentration of the mixture is 60 mass% or more, the amount of solid content of the obtained solubilized polymer-containing material with respect to the total treatment amount becomes large, and therefore, the efficiency at which the solubilized polymer is produced can be increased. Furthermore, when the solid content concentration of the mixture is 60 mass% or greater, the solid content concentration of the obtained solubilized polymer-containing material is also high, and therefore, a merit is obtained in that the energy required for drying can be reduced, and thus, the solubilized polymer-containing material can be reused more efficiently in terms of energy.

Here, when the mixture contains only the water-absorbent resin, water, and the peroxide, the solid content concentration of the mixture containing the water-absorbent resin, water, and the peroxide may be calculated based on the mass of the water-absorbent resin, the mass of water, and the type and mass of the peroxide to be subjected to the heat treatment step. When the mixture contains other components in addition to the water-absorbent resin, water, and the peroxide, the mass of the other components may be taken into consideration in the calculation. Here, as the other components, for example, pulp, plastic, and/or the like may be contained within a range not adversely affecting the effects of the present invention. In relation to the water-absorbent resin, the content of solid components among the other components is preferably 10 mass% or less, more preferably 1 mass% or less, and further preferably 0.1 mass% or less. In addition, it is particularly preferable that the mixture substantially does not contain a solid component among the other components. The solid content concentration of the mixture can be calculated by (total mass obtained by calculating and totaling for each component that is a solid at 25°C the (mass of the component that is solid at 25°C) × (the solid content concentration of the component that is solid at 25°C)) / (the total mass of each of the components) × 100 (mass%). For example, when the mixture is a mixture of a water-absorbent resin, water, and hydrogen peroxide, the hydrogen peroxide is a liquid at 25°C, and therefore the solid content concentration of the mixture can be calculated by (mass of the water-absorbent resin) × (solid content concentration of water-absorbent resin) / (total mass of the water-absorbent resin, water, and hydrogen peroxide) × 100. It should be noted that the solid content concentration of the components that are solid at 25°C is determined by the same measurement method as that for the solid content concentration of the solubilized polymer-containing material described in the Examples section.

For example, when the mass of the water-absorbent resin contained in a used absorbent article is unknown, the mass of the water-absorbent resin is determined by using the mass of the water-absorbent resin contained in the unused absorbent article and a general value of the fluid retention capacity of the water-absorbent resin in the used absorbent article, or by assuming that the content (solid content equivalent value) of the water-absorbent resin relative to the total mass of the used absorbent article is from 3 to 9 mass%. Although the actual content of the water-absorbent resin may vary greatly depending on the usage state of the used absorbent article, a person skilled in the art could appropriately adjust the decomposition conditions while confirming the actual decomposition state.

Heat Treatment Temperature

In one embodiment of the present invention, the temperature of the heat treatment is 60°C or higher, more preferably from 80°C to 250°C, still more preferably from 105°C to 230°C, and particularly preferably from 120°C to 210°C. Here, the temperature of the heat treatment means the temperature of the mixture (the material temperature) during the heat treatment.

More specifically, when the temperature of the heat treatment is set to 60°C or higher, the amount of radicals generated from the peroxide is increased, and the time required to obtain a solubilized polymer-containing material can be shortened. Moreover, the temperature of the heat treatment is preferably 250°C or lower because at such a temperature, the generated radicals are less likely to be deactivated. The method for adjusting the temperature of the heat treatment is not particularly limited, and examples thereof include a method in which a mixture containing a water-absorbent resin, water, and a peroxide is prepared at room temperature, and then the mixture is exposed to a predetermined temperature. A more specific example of such a method is a method of immersing a container filled with the mixture in an oil bath at a predetermined temperature. Moreover, the method of exposing the mixture to the predetermined temperature is not particularly limited, and a known method such as a steam jacket may be used. Alternatively, the water-absorbent resin, water, and the like heated to the predetermined temperature may be mixed and maintained at that temperature. Meanwhile, in order to avoid a decrease in the mass average molecular weight of the solubilized polymer due to excessive decomposition, it is preferable not to use electromagnetic waves. That is, it is preferable not to produce a solubilized polymer through the use of electromagnetic waves.

Dew Point of Gas Phase Portion in Heat Treatment Device in Heat Treatment Step

In one embodiment of the present invention, the dew point of the gas phase portion in the heat treatment device in the heat treatment step is preferably 30°C or higher, more preferably from 40°C to 100°C, still more preferably from 50°C to 100°C, and particularly preferably from 60°C to 100°C.

In a conventional method of solubilizing a water-absorbent resin using a peroxide as a decomposition agent, the reaction is controlled by the temperature of the water-absorbent resin (material temperature) or the temperature of the heat medium. However, as a result of studies aimed at further improving the decomposition rate, the present inventors newly discovered that controlling, to a prescribed range, the dew point of the gas phase portion in the heat treatment device in the heat treatment step is an effective measure for improving the decomposition rate. This is an area that had not been the focus of attention in the past.

In one embodiment of the present invention, the water-absorbent resin can be more efficiently decomposed by setting the dew point of the gas phase portion in the heat treatment device to 30°C or higher. Although the reason for this is not clear, it is considered that when the dew point is 30°C or higher, the decomposition reaction easily advances because evaporation of moisture from the water-absorbent resin is delayed and the peroxide easily permeates into the water-absorbent resin powder.

The present inventors also discovered that setting the dew point of the gas phase portion in the heat treatment device to 30°C or higher yields a merit of narrowing the molecular weight distribution of the water-soluble content of the obtained solubilized polymer-containing material. Furthermore, setting the dew point of the gas phase portion in the heat treatment device to 30°C or higher also yields a merit of reducing the YI value and suppressing discoloration of the obtained solubilized polymer-containing material.

As the heat treatment device for heating the mixture under conditions including the heat treatment temperature and the dew point of the gas phase portion in the heat treatment device, a known dryer or heating furnace equipped with a gas supply device and/or a gas exhaust device for setting the dew point of the gas phase portion in the heat treatment device is used. Examples of the gas to be used include steam; air; an inert gas such as nitrogen; or a mixed gas of two or more of these gases, and the supply amount thereof is appropriately determined. The gas for adjusting the heat treatment temperature and the dew point of the gas phase portion in the heat treatment device may be appropriately depressurized or pressurized, and may be appropriately heated or cooled, and usually, air at around room temperature (for example, from 0°C to 50°C) may be supplied at substantially normal pressure ($1.013 \times 10^5$ Pa (1 atm) $\pm 10\%$, preferably $\pm 5\%$, and more

preferably +1%). The method for controlling the dew point of the gas phase portion in the heat treatment device is not particularly limited, and for example, a method of controlling the dew point using an device for automatically controlling the mixing amount of steam and air so as to achieve a prescribed dew point setting can be suitably used. As the heat treatment device, for example, a conductive heat transfer type, radiant heat transfer type, hot air heat transfer type, or dielectric heating type dryer or heating furnace equipped with a gas supply device and/or a gas exhaust device is suitable. Specific examples thereof include a belt type, grooved stirring-type, screw type, rotary type, disk type, kneading type, fluidized bed type, air flow type, infrared type, or electron beam type dryer or heating furnace equipped with a supply device for supplying steam, air, an inert gas such as nitrogen, or a mixed gas of two or more of these gases. Among these heat treatment devices, a conductive heat transfer type or a hot air heat transfer type is more preferable, and it is further preferable to heat the mixture while stirring and/or flowing the mixture in the conductive heat transfer type, and to control the dew point of the gas phase portion in the heat treatment device. This is an area on which attention has not been made in the past. In the case of heating the mixture by conductive heat transfer, the mixture may be heated by a heat transfer surface heated by a heat medium (for example, in the case of a dryer or a heating furnace equipped with a stirring blade, a wall surface of the dryer or heating furnace and the stirring blades), and the upper space of the mixture not in contact with the heat transfer surface may be controlled to a specific temperature and a specific dew point. The heat treatment may be carried out in a batch manner or a continuous manner.

pH

In the heat treatment step, the pH of the mixture containing the water-absorbent resin, water, and the peroxide is not particularly limited. Decomposition may be carried out by adjusting the pH of the mixture to a range of preferably from 2.7 to 10.0, more preferably from 4.0 to 9.0, and still more preferably from 6.5 to 8.5. When the pH of the mixture is within this range, the decomposition property is high, and the issue of discoloration of the solubilized polymer-containing material does not occur, which is preferable. The pH of the mixture need only be adjusted within this range for a certain period of time sufficient for the decomposition of the water-absorbent resin to sufficiently proceed, and more preferably, the pH is adjusted to fall within the above pH range from the startup of decomposition to the completion of decomposition.

The pH of the mixture can be adjusted by adding a pH adjuster such as an acid or a base as necessary. Examples of the acid that can be used include, but are not particularly limited to, inorganic acids such as hydrochloric acid, sulfuric acid, nitric acid, and phosphoric acid; and organic acids such as acetic acid and citric acid. Examples of the base that can be used include, but are not particularly limited to, bases such as sodium hydroxide, sodium carbonate, potassium hydroxide, and magnesium hydroxide.

Stirring

In the method for producing a solubilized polymer-containing material according to one embodiment of the present invention, it is more preferable to perform stirring in the heat treatment step. By stirring during the heat treatment, the particle size of the water-absorbent resin can be reduced, and coarse grain formation of the obtained solubilized polymer-containing material can be suppressed. Therefore, a merit of stirring during the heat treatment is that the handling property of the solubilized polymer-containing material is improved. In addition, in the case of stirring during the heat treatment, the surface area of the water-absorbent resin is increased by reducing the particle size of the water-absorbent resin, and the time required to obtain the solubilized polymer-containing material can be shortened.

In one embodiment of the present invention, the stirring may be carried out for a certain period of time until decomposition of the water-absorbent resin sufficiently proceeds, and is more preferably carried out from the startup of heat treatment to the completion of the heat treatment.

The device for stirring is not particularly limited, and among the above-mentioned dryers or heating furnaces, a dryer or heating furnace having a stirring function can be suitably used. Alternatively, as the device for carrying out the stirring, a dryer or a heating furnace equipped with a cylindrical mixer, a double-wall conical mixer, a V-shaped mixer, a ribbon mixer, a screw mixer, a fluidized bed furnace, a rotary disk mixer, an air flow mixer, a double-arm kneader, an internal mixer, a pulverizing kneader, a rotary mixer, a screw extruder, a turbulizer, a Ploughshare mixer, or the like can be suitably used.

Heat Treatment Time

In the heat treatment step, the time for which the mixture containing the water-absorbent resin, water, and the peroxide is subjected to the heat treatment is not particularly limited, and is, for example, from 1 minute to 3 hours, more preferably from 3 minutes to 2 hours, and still more preferably from 5 minutes to 1 hour.

(1-2) Other Steps

The method for producing a solubilized polymer-containing material according to one embodiment of the present invention need only include the heat treatment step, but may include other steps.

Examples of the other steps include a mixing step of mixing a water-absorbent resin, water, and peroxide to prepare a mixture containing the water-absorbent resin, water, and the peroxide. The method of mixing the water-absorbent resin, water, and peroxide is not particularly limited, and may be any method. Among these, mixing using a mechanical stirring-type mixing device is more preferable. Examples of the mechanical stirring-type mixing device include a turbulizer, a Lodige mixer, and a mortar mixer. Moreover, either a batch mixer or a continuous mixer may be used for mixing. Through the use of a stirring-type mixing device, the particle size of the water-absorbent resin can be reduced, and coarse grain formation of the obtained solubilized polymer-containing material can be suppressed. Therefore, an advantage of using a stirring-type mixing device is that the handling property of the solubilized polymer-containing material is improved. In addition, in the case of using a stirring-type mixing device, the surface area of the water-absorbent resin is increased by reducing the particle size of the water-absorbent resin, and the time required to obtain the solubilized polymer-containing material can be shortened.

(1-3) Physical Properties of Solubilized Polymer-Containing Material

Molecular Weight and Molecular Weight Distribution of Water-Soluble Content of Solubilized Polymer-Containing Material

The lower limit of the mass average molecular weight (Mw) of the water-soluble content of the solubilized polymer-containing material obtained by the method for producing a solubilized polymer-containing material according to one embodiment of the present invention is preferably 30000 or greater, more preferably 40000 or greater, further preferably 50000 or greater, particularly preferably 60000 or greater, and most preferably 70000 or greater. The upper limit of the mass average molecular weight (Mw) of the water-soluble content of the solubilized polymer-containing material is preferably 1000000 or less, more preferably 900000 or less, and still more preferably 850000 or less. As a preferable numerical range, any range selected from the numerical values of the upper and lower limits may be applied. For example, the mass average molecular weight may be from 30000 to 1000000, from 50000 to 1000000, or from 40000 to 850000. A mass average molecular weight of 30000 or greater is preferable because the amount of the water-soluble content of a water-absorbent resin produced using the solubilized polymer-containing material as a portion of the raw materials is small, and the water-absorbent resin exhibits an excellent water absorption property. Moreover, a mass average molecular weight of 1000000 or less is preferable because the viscosity of the aqueous solution of the solubilized polymer-containing material is low and the handling properties are good. Here, the molecular weight and molecular weight distribution of the water-soluble content of the solubilized polymer-containing material can also be said to be the molecular weight and molecular weight distribution of the solubilized polymer in the solubilized polymer-containing material.

In one embodiment of the present invention, the number average molecular weight (Mn) of the water-soluble content of the obtained solubilized polymer-containing material is preferably from 5000 to 500000, more preferably from 6000 to 400000, and even more preferably from 7000 to 300000. A number average molecular weight of 5000 or greater is preferable because the amount of the water-soluble content of a water-absorbent resin produced using the solubilized polymer-containing material as a portion of the raw materials is small, and the water-absorbent resin exhibits an excellent water absorption property. Moreover, a number average molecular weight of 500000 or less is preferable because the viscosity of the aqueous solution of the solubilized polymer-containing material is low and the handling property is good.

In one embodiment of the present invention, the molecular weight distribution (Mw/Mn) of the water-soluble content of the obtained solubilized polymer-containing material is preferably 6.0 or less, more preferably 5.0 or less, and even more preferably 4.0 or less. A molecular weight distribution of 6.0 or less is preferable because the molecular weight distribution of the water-soluble content of the solubilized polymer-containing material is narrow, the amount of the water-soluble content of a water-absorbent resin produced using the solubilized polymer-containing material as a portion of the raw materials is small, and the water-absorbent resin exhibits an excellent water absorption property. The molecular weight distribution of the water-soluble content of the solubilized polymer-containing material can be adjusted to a preferable range by, for example, adjusting the dew point of the gas phase portion in the heat treatment device.

In the present specification, the mass average molecular weight (Mw), the number average molecular weight (Mn), and the molecular weight distribution (Mw/Mn) of the water-soluble content of the solubilized polymer-containing material are values determined by the methods described in the Examples section below.

Solid Content Concentration of Solubilized Polymer-Containing Material

In one embodiment of the present invention, the solid content concentration of the obtained solubilized polymer-containing material is preferably from 60 mass% to 100 mass%, more preferably from 70 mass% to 100 mass%, and still more preferably from 80 mass% to 100 mass%. In the present invention, the mixture that contains the water-absorbent resin and is to be subjected to the heat treatment is configured to have a high solid content concentration ($\geq$ 60 mass%),

whereby the amount of solid content in the obtained solubilized polymer-containing material becomes large, and therefore the need to carry out freeze-drying as in a conventional method is eliminated, and the energy required for drying can be significantly reduced.

In the present specification, the solid content concentration of the solubilized polymer-containing material is a value that is determined by the method described in the Examples section below.

YI Value of Solubilized Polymer-Containing Material

In one embodiment of the present invention, the YI value of the obtained solubilized polymer-containing material is preferably 20 or less, more preferably 18 or less, and still more preferably 16 or less. When the YI value is 20 or less, even when the solubilized polymer-containing material is used as a raw material for the production of a water-absorbent resin, discoloration of the water-absorbent resin obtained by the production can be suppressed.

In the present specification, the YI value of the solubilized polymer-containing material is a value that is determined by the method described in the Examples section below.

Amount of Water-Soluble Content of Solubilized Polymer-Containing Material

In the method for producing a solubilized polymer-containing material according to one embodiment of the present invention, an amount of the increase in the water-soluble content as calculated by the following Formula 1) is preferably 5 mass% or more, more preferably 10 mass% or more, and even more preferably 30 mass% or more. When the amount of the increase in the water-soluble content is less than 5 mass%, the solubilization of the water-absorbent resin may be insufficient.

$$\text{Water-soluble content increase amount (mass\%)} = (\text{Extr. C}) - (\text{Extr. A}) \quad \cdots \quad \text{Formula 1)}$$

Here,

Extr. A is an amount of a water-soluble content of the water-absorbent resin (A), and
Extr. C is an amount of the water-soluble content of the solubilized polymer-containing material (C).

In the present specification, the amount of the water-soluble content in the solubilized polymer-containing material or water-absorbent resin is a value that is determined by the method described in the Examples section below.

In the method for producing a solubilized polymer-containing material according to one embodiment of the present invention, on the basis of the amount of the solid content contained in the solubilized polymer-containing material being 100 parts by mass, the proportion of the amount of the water-soluble content that can be solubilized among the solid content of the obtained solubilized polymer-containing material is preferably 30 parts by mass or more, more preferably 40 parts by mass or more, further preferably 50 parts by mass or more, 60 parts by mass or more, 70 parts by mass or more, and 80 parts by mass or more in this order, and most preferably 90 parts by mass or more.

Material Balance of Solubilized Polymer-Containing Material Before and After Treatment

In the method for producing a solubilized polymer-containing material according to one embodiment of the present invention, it is preferable that there is no loss in terms of material balance in the process of obtaining the solubilized polymer-containing material from the water-absorbent resin. For example, in a relationship between a solid content amount ($\alpha$) of the solubilized polymer-containing material and a solid content amount ($\beta$) of the water-absorbent resin serving as a raw material of the solubilized polymer-containing material, a mass ratio ($\gamma$) before and after the heat treatment as calculated by the following Formula 2) is preferably from 80 to 120, more preferably from 90 to 110, and further preferably from 95 to 105.

Mass ratio ($\gamma$) before and after reaction = (solid content amount ($\beta$) of water-absorbent resin) / (solid content amount ($\alpha$) of solubilized polymer-containing material) $\times$ 100    Formula 2

A mass ratio ($\gamma$) before and after the heat treatment of from 80 to 120 means that a solubilized polymer having a high purity of the component derived from the water-absorbent resin is obtained at a high yield.

Here, the solid content amount ($\alpha$) of the solubilized polymer-containing material and the solid content amount ($\beta$)

of the water-absorbent resin are calculated by the following Formula 3) and Formula 4), respectively.

Solid content amount ($\alpha$) of solubilized polymer-containing material = (mass of solubilized polymer-containing material recovered after heat treatment) $\times$ (solid content concentration of solubilized polymer-containing material recovered after heat treatment)          Formula 3

Solid content amount ($\beta$) of water-absorbent resin = (mass of water-absorbent resin used as a raw material) $\times$ (solid content concentration of water-absorbent resin used as a raw material)          Formula 4

In the present specification, the solid content concentration of the solubilized polymer-containing material or water-absorbent resin is a value that is determined by the method described in the Examples section below.

When the mass ratio ($\gamma$) of the solubilized polymer-containing material before and after the reaction is within the above range, the solubilized polymer-containing material can be obtained without a loss in mass, which is preferable.

(1-4) Solubilized Polymer-Containing Material

One aspect of the invention also includes a solubilized polymer-containing material. A solubilized polymer-containing material according to one embodiment of the present invention is a solubilized polymer-containing material obtained by heat-treating a mixture containing a water-absorbent resin, water, and a peroxide, wherein the solid content concentration of the solubilized polymer-containing material is 60 mass% or greater, and the mass average molecular weight (Mw) of a water-soluble content of the solubilized polymer-containing material is from 30000 to 1000000. Here, the "mixture containing a water-absorbent resin, water, and a peroxide", the method for obtaining a solubilized polymer-containing material by heat-treating the mixture, and the like are as described above. The more preferable ranges of the solid content concentration of the solubilized polymer-containing material, the proportion of the amount of the water-soluble content that can be solubilized in water when the amount of solid content is 100 parts by mass, and the mass average molecular weight of the water-soluble content of the solubilized polymer-containing material are also as described above.

Mw/Mn of the water-soluble content of the solubilized polymer-containing material is preferably 6.0 or less. Also, the solubilized polymer-containing material is preferably not obtained by use of electromagnetic waves. Furthermore, the YI value of the solubilized polymer-containing material is preferably 20 or less. The more preferable ranges of Mw/Mn of the water-soluble content of the solubilized polymer-containing material and of the YI value of the solubilized polymer-containing material are as described above.

In the present application, the peroxide content in the obtained solubilized polymer-containing material is preferably 1.6 wt.% or less, more preferably 1.0 wt.% or less, further preferably 0.5 wt.% or less, and most preferably 0.1 wt.% or less (or the detection limit amount or less), based on the solid content weight of the solubilized polymer-containing material.

[2] Method for Producing Water-Absorbent Resin Using Solubilized Polymer-Containing Material as Portion of Raw Materials

Since the solubilized polymer-containing material obtained by the production method described above has a large amount of solid content, the need to carry out drying as in the conventional method is eliminated, and the energy required for drying can be significantly reduced. Therefore, the solubilized polymer-containing material obtained by the production method described above, or in other words, the solubilized polymer-containing material obtained by decomposing a water-absorbent resin can be suitably used as a portion of the raw materials that are used when a water-absorbent resin is newly produced (when a conventional water-absorbent resin is produced using, as a raw material, a monomer constituting the water-absorbent resin).

That is, one aspect of the present invention also includes a method for producing a water-absorbent resin, the method including an addition step of adding a solubilized polymer-containing material obtained by the production method described above.

In one embodiment of the present invention, the addition step is a step of adding the solubilized polymer-containing material in at least one step selected from an aqueous monomer solution preparation step, a polymerization step, a hydrogel-grinding step, a drying step, and a surface-crosslinking step in the production of the water-absorbent resin. In addition, the solubilized polymer-containing material may be crosslinked using a crosslinking agent (such as an internal crosslinking agent and a surface-crosslinking agent described below) to form a crosslinked polymer-containing material, and then mixed with a newly produced water-absorbent resin in any of the steps described above. Further, the solubilized polymer-containing material may be crosslinked using a crosslinking agent to form a crosslinked polymer-containing material, and then the crosslinked polymer-containing material may be made into a product through a process similar to a known process (with steps including drying, pulverization, classification, surface-treatment, cooling, particle size adjustment, and the like).

(2-1) Aqueous Monomer Solution Preparation Step

This step is a step of preparing an aqueous solution containing an acrylic acid (salt) as a main component (hereinafter, referred to as "aqueous monomer solution"). A monomeric slurry liquid may be used as long as the water absorption performance of the resulting water-absorbent resin does not deteriorate. However, in this section, an aqueous monomer solution will be described for convenience. In addition, the "main component" means that the amount (content) of acrylic acid (salt) used is typically 50 mol% or more, preferably 70 mol% or more, and more preferably 90 mol% or more (upper limit: 100 mol%), per the all of the monomers (excluding the internal crosslinking agent) to be subjected to the polymerization reaction of the water-absorbent resin.

Acrylic Acid

In one embodiment of the present invention, from the viewpoints of the physical properties of the resulting water-absorbent resin and productivity, acrylic acid and/or a salt thereof (hereinafter, may also be referred to as an "acrylic acid (salt)") is used as a monomer constituting the water-absorbent resin. The "acrylic acid" may be a known acrylic acid, and from the viewpoints of the polymerizability of the acrylic acid and the color tone of the water-absorbent resin, the acrylic acid preferably contains, as a polymerization inhibitor, a methoxyphenol, and more preferably p-methoxyphenol, at an amount of preferably 200 ppm or less, more preferably from 10 ppm to 160 ppm, and still more preferably from 20 ppm to 100 ppm. Regarding impurities in acrylic acid, the compounds disclosed in US 2008/0161512 A are also applied to an embodiment of the present invention.

In addition, the "acrylic acid salt" is a product produced by neutralizing the acrylic acid with the following basic composition. The acrylic acid salt may be a commercially available acrylic acid salt (for example, sodium acrylate) or may be produced through neutralization in a water-absorbent resin production plant.

Basic Composition

In an embodiment of the present invention, the "basic composition" refers to a composition containing a basic compound, such as a commercially available aqueous sodium hydroxide solution. Specific examples of the basic compound include alkali metal salts such as alkali metal carbonates and/or alkali metal hydrogen carbonates, and alkali metal hydroxides such as sodium hydroxide, potassium hydroxide, and lithium hydroxide. Examples of the basic compound other than these include ammonia and organic amines. Among these, from the viewpoint of the physical properties of the resulting water-absorbent resin, a basic compound that is strongly basic is preferable. That is, as the "basic composition", for example, hydroxides of alkali metals such as sodium hydroxide, potassium hydroxide, and lithium hydroxide are preferable, and sodium hydroxide is more preferable.

Neutralization

As neutralization in an embodiment of the present invention, either neutralization of acrylic acid (before polymerization) or neutralization (after polymerization) of a crosslinked hydrogel polymer obtained by subjecting the acrylic acid to crosslinking polymerization (hereinafter referred to as "post-neutralization") can be selected, or both can be used in combination. In a case in which the solubilized polymer-containing material is used as a raw material (recycled raw material) for the production of a water-absorbent resin, when the solubilized polymer-containing material contains a basic compound, the basic compound neutralizes the acrylic acid before polymerization or the crosslinked hydrogel polymer after polymerization. Therefore, as described later, the rate of neutralization of the water-absorbent resin as a final product is adjusted to a predetermined range by adding the basic compound. In addition, these neutralizations may be carried out continuously or batchwise, and are not particularly limited, but are preferably carried out continuously from the viewpoint of production efficiency and the like. Regarding conditions such as the device for performing neutralization, the neutralization temperature, and the residence time, the conditions described in WO 2009/123197, US 2008/0194863 A1, and the like can also be applied to the present invention.

The rate of neutralization in one embodiment of the present invention is preferably from 10 mol% to 90 mol%, more preferably from 40 mol% to 85 mol%, still more preferably from 50 mol% to 80 mol%, and particularly preferably from 60 mol% to 75 mol%, relative to an acid group of the monomer. The rate of neutralization is preferably 10 mol% or greater because at such a rate of neutralization, the fluid retention capacity is excellent. On the other hand, when the rate of neutralization is 90 mol% or less, a water-absorbent resin having a high absorption capacity under pressure can be obtained, and thus such a rate of neutralization is preferable. Note that a "rate of neutralization of 75 mol%" means a mixture of 25 mol% of acrylic acid and 75 mol% of an acrylic acid salt. In addition, the mixture may be referred to as a partially neutralized acrylic acid.

The rate of neutralization is the same even in the case of the latter neutralization. The rate of neutralization is also applied to the rate of neutralization of the water-absorbent resin as a final product. The present invention is used in the production of a water-absorbent resin using the solubilized polymer-containing material as a portion of the raw materials. When the solubilized polymer-containing material contains a basic compound, neutralization of acrylic acid (before polymerization) and/or post-neutralization of the crosslinked hydrogel polymer is appropriately adjusted so that the rate of neutralization of the water-absorbent resin as a final product including the basic compound falls within a predetermined range.

Other Monomers

In an embodiment of the present invention, the term "other monomers" refer to monomers other than the acrylic acid (salt), and the water-absorbent resin can be produced by using other monomers in combination with the acrylic acid (salt). Examples of the other monomers include water-soluble or hydrophobic unsaturated monomers. Specifically, the compounds disclosed in US 2005/0215734 A (excluding acrylic acid) are also applied to an embodiment of the present invention.

Internal Crosslinking Agent

As the internal crosslinking agent used in an embodiment of the present invention, the compounds disclosed in US 6241928 are also applied to an embodiment of the present invention. Among these, one or more compounds are selected in consideration of reactivity. From the viewpoint of water absorption performance of the resulting water-absorbent resin, a compound having two or more polymerizable unsaturated groups, more preferably a compound that is thermally degradable at the following drying temperature, and still more preferably a compound having two or more polymer unsaturated groups with a (poly)alkylene glycol structural unit are used as the internal crosslinking agent. The polymerizable unsaturated group is preferably an allyl group or a (meth)acrylate group, and is more preferably a (meth) acrylate group. The (poly)alkylene glycol structural unit is preferably polyethylene glycol, and the n number is preferably from 1 to 100, and more preferably from 6 to 50.

The usage amount of the internal crosslinking agent in relation to all the monomers is preferably from 0.0001 mol% to 10 mol%, and more preferably from 0.001 mol% to 1 mol%. When the usage amount of the internal crosslinking agent is within the above range, a desired water-absorbent resin can be obtained. When the usage amount of the internal crosslinking agent is too low, the gel strength tends to decrease, and the water-soluble content tends to increase, and when the usage amount of the internal crosslinking agent is too high, the fluid retention capacity tends to decrease, and thus such usage amounts are not preferred.

In an embodiment of the present invention, a method is preferably applied in which a predetermined amount of an internal crosslinking agent is added in advance to an aqueous monomer solution, and a crosslinking reaction is carried out simultaneously with polymerization. In addition to this method, a method for adding an internal crosslinking agent during and/or after polymerization and then crosslinking; a method for performing radical crosslinking using a radical polymerization initiator; a method for performing radiation crosslinking using active energy rays such as an electron beam or ultraviolet light, or the like can also be adopted. These methods may be used in combination.

Other Substances to Be Added to Aqueous Monomer Solution

In an embodiment of the present invention, from the viewpoint of improving the physical properties of the resulting water-absorbent resin, the following substances can be added during preparation of the aqueous monomer solution.

Specifically, a hydrophilic polymer such as starch, a starch derivative, cellulose, a cellulose derivative, polyvinyl alcohol, polyacrylic acid (salt), and a crosslinked polyacrylic acid (salt) may be added at an amount of preferably 50 mass% or less, more preferably 20 mass% or less, still more preferably 10 mass% or less, and particularly preferably 5 mass% or less (with the lower limit being 0 mass%); and a foaming agent such as a carbonate, an azo compound, or bubbles, a surfactant, a chelating agent, a chain transfer agent, and the like can be added at an amount of preferably 5 mass% or less, more preferably 1 mass% or less, and still more preferably 0.5 mass% or less (with the lower limit being 0 mass%). Moreover, the above-described substances may be added not only in the form of being added to the aqueous monomer solution, but also in the form of being added during polymerization, and both of these forms may be used in combination.

When a water-soluble resin or a water-absorbent resin is used as the hydrophilic polymer, a graft polymer or a water-absorbent resin composition (for example, starch-acrylic acid polymer, PVA-acrylic acid polymer, and the like) is produced. These polymers and water-absorbent resin compositions are also within the scope of the present invention.

(2-2) Polymerization Step

The polymerization step is a step of obtaining a crosslinked hydrogel polymer (hereinafter, referred to as a "hydrogel") by polymerizing an acrylic acid (salt)-based aqueous monomer solution obtained in the aqueous monomer solution preparation step.

Polymerization Initiator

A polymerization initiator usable in an embodiment of the present invention is appropriately selected in accordance with a form of polymerization and the like and is not particularly limited to any particular one. Examples of the polymerization initiator include thermally decomposable polymerization initiators, photo-decomposable polymerization initiators, or redox-based polymerization initiators that use a reducing agent in combination to accelerate the decomposition of these polymerization initiators. Specifically, one or more of the polymerization initiators disclosed in US 7265190 B may be used as the polymerization initiator. From the viewpoints of the handling properties of the polymerization initiator and the physical properties of the water-absorbent resin, a peroxide or an azo compound is preferably used as the polymerization initiator, a peroxide is more preferably used, and a persulfate is further preferably used. The usage amount of the polymerization initiator in relation to the monomers is preferably from 0.001 mol% to 1 mol%, and more preferably from 0.001 mol% to 0.5 mol%. The usage amount of the reducing agent in relation to the monomers is preferably from 0.0001 mol% to 0.02 mol%. Instead of using the polymerization initiator, the polymerization reaction may be carried out by irradiating with active energy rays such as radiation, an electron beam, and ultraviolet light, or these active energy rays and the polymerization initiator may be used in combination.

Form of Polymerization

The form of polymerization to be applied in one embodiment of the present invention is not particularly limited, but from viewpoints such as the water absorption properties and the ease of controlling polymerization, preferable examples thereof include spray droplet polymerization, aqueous solution polymerization, and reverse phase suspension polymerization, more preferable examples thereof include aqueous solution polymerization and reverse phase suspension polymerization, and further preferable examples thereof include aqueous solution polymerization. Among these forms of polymerization, continuous aqueous solution polymerization is particularly preferable, and any of continuous belt polymerization and continuous kneader polymerization can be applied. As specific forms of polymerization, continuous belt polymerization is disclosed in US 4893999, US 6241928, US 2005/215734, and the like, and continuous kneader polymerization is disclosed in US 6987151, US 6710141, and the like. Adopting these forms of the continuous aqueous solution polymerization improves the production efficiency of the water-absorbent resin.

Preferable forms of the continuous aqueous solution polymerization include "high-temperature initiation polymerization" and "high-concentration polymerization". The "high-temperature initiation polymerization" refers to a form in which polymerization is initiated with the temperature of an aqueous monomer solution set to preferably 30°C or higher, more preferably 35°C or higher, further preferably 40°C or higher, and particularly preferably 50°C or higher (with the upper limit being the boiling point). The "high-concentration polymerization" refers to a form in which polymerization is carried out with a monomer concentration set to preferably 30 mass% or more, more preferably 35 mass% or more, further preferably 40 mass% or more, and particularly preferably 45 mass% or more (with the upper limit being the saturation concentration). These forms of polymerization can also be used in combination.

In one embodiment of the present invention, the polymerization can be carried out in an air atmosphere, but from the viewpoint of the color tone of the resulting water-absorbent resin, the polymerization is preferably carried out in an inert gas atmosphere such as nitrogen or argon. In this case, for example, the oxygen concentration is preferably controlled to 1 vol% or less. Dissolved oxygen in an aqueous monomer solution is also preferably substituted with an inert gas (e.g., amount of dissolved oxygen: less than 1 mg/l). Moreover, in one embodiment of the present invention, the polymerization form may be foaming polymerization in which polymerization is performed with bubbles dispersed (particularly the inert gas or the like) in an aqueous monomer solution.

(2-3) Hydrogel-Grinding Step

This step is a step of subjecting the hydrogel obtained in the polymerization step to gel-grinding with, for example, a screw extruder such as a kneader or a meat chopper, or a gel-grinder such as a cutter mill to obtain a hydrogel in a particulate shape (hereinafter, referred to as "particulate hydrogel"). When the polymerization step is kneader polymerization, the polymerization step and the gel-grinding step are carried out simultaneously. When a particulate hydrogel is to be directly produced in a polymerization process, such as in gas phase polymerization or reverse phase suspension polymerization, the hydrogel-grinding step is not carried out in some cases. With respect to gel-grinding conditions and forms other than those described above, the contents disclosed in WO 2011/126079 A are preferably applied to the present invention.

(2-4) Drying Step

The drying step is a step of obtaining a dried polymer by drying the particulate hydrogel produced in the polymerization step and/or the hydrogel-grinding step until the particulate hydrogel has a desired resin solid content. The resin solid content is determined from the drying loss (the change in mass after heating 1 g of the water-absorbent resin at 180°C for three hours) and is preferably 80 mass% or more, more preferably from 85 mass% to 99 mass%, further preferably from 90 mass% to 98 mass%, and particularly preferably from 92 mass% to 97 mass%.

The method for drying the particulate hydrogel is not particularly limited, and examples thereof include thermal drying, hot air drying, drying under reduced pressure, fluidized bed drying, infrared drying, microwave drying, drum dryer drying, drying by azeotropic dehydration with a hydrophobic organic solvent, and high humidity drying by use of high-temperature water vapor. Among these methods, from the viewpoint of drying efficiency, hot air drying is preferable, and band drying in which hot air drying is carried out on a ventilation belt is more preferable.

From the viewpoint of the color tone and drying efficiency of the water-absorbent resin, the drying temperature (temperature of hot air) in the hot air drying is preferably from 120°C to 250°C, and more preferably from 150°C to 200°C. Note that in addition to the drying temperature, other drying conditions such as the wind speed of the hot air and the drying time may be appropriately set according to details such as the water content and total mass of the particulate hydrogel to be dried, and the targeted resin solid content, and when band drying is to be carried out, the various conditions disclosed in WO 2006/100300 A, WO 2011/025012 A, WO 2011/025013 A, WO 2011/111657 A, and the like, may be applied as appropriate.

When the drying temperature, the drying time, and the like described above are within the above ranges, the centrifuge retention capacity (CRC) (fluid retention capacity), the extractables (Ext) (water-soluble content), and the color tone of the obtained water-absorbent resin can be set within desired ranges (see (2-6) and (2-7) below).

(2-5) Surface-Crosslinking Step

The surface-crosslinking step is a step of further providing a portion with a higher crosslinking density on the surface layer (a portion several tens of micrometers from the surface of the water-absorbent resin powder) of the water-absorbent resin powder obtained through the above-described steps, and the step thereof is configured from a mixing step, a heat treatment step, and a cooling step (optional).

In the surface-crosslinking step, a water-absorbent resin (water-absorbent resin particles) that has been surface-crosslinked is obtained through radical crosslinking, surface polymerization, a crosslinking reaction with a surface-crosslinking agent, or the like, on the surface of the water-absorbent resin powder.

Surface-Crosslinking Agent

The surface-crosslinking agent used in an embodiment of the present invention is not particularly limited, and examples thereof include organic or inorganic surface-crosslinking agents. Among these, an organic surface-crosslinking agent that reacts with a carboxyl group is preferable from viewpoints such as the physical properties of the water-absorbent resin and the handling properties of the surface-crosslinking agent. For example, one or more types of the surface-crosslinking agents disclosed in US 7183456 B can be used as the surface-crosslinking agent. More specific examples of the surface-crosslinking agent include: a polyhydric alcohol compound; an epoxy compound; a haloepoxy compound; a polyvalent amine compound or a condensate thereof with a haloepoxy compound; an oxazoline compound; an oxazolidinone compound; a polyvalent metal salt; an alkylene carbonate compound; and a cyclic urea compound.

The usage amount of the surface-crosslinking agent (the total usage amount when a plurality of surface-crosslinking agents are used) is preferably from 0.01 parts by mass to 10 parts by mass, and more preferably from 0.01 parts by mass to 5 parts by mass, per 100 parts by mass of the water-absorbent resin powder. In addition, the surface-crosslinking agent is preferably added as an aqueous solution, and in this case, the amount of water used is preferably from 0.1 parts by mass to 20 parts by mass, and more preferably from 0.5 parts by mass to 10 parts by mass, per 100 parts by mass of the water-absorbent resin powder. Further, when a hydrophilic organic solvent is used as necessary, the usage amount of the organic solvent is preferably 10 parts by mass or less, and more preferably 5 parts by mass or less, per 100 parts by mass of the water-absorbent resin powder.

Moreover, each additive added in a "re-humidification step" described below may be added within a range of 5 parts by mass or less by mixing with the surface-crosslinking agent (aqueous solution), or may be separately added in the main mixing step.

Mixing Step

This step is a step of mixing the water-absorbent resin powder and the surface-crosslinking agent. The method for mixing the surface-crosslinking agent is not particularly limited, and examples thereof include a method in which a surface-crosslinking agent solution is prepared in advance, and the solution is preferably sprayed or dropped, and more preferably sprayed onto a water-absorbent resin powder and mixed therewith.

An apparatus for mixing is not particularly limited, and a high-speed stirring type mixer is preferable, and a high-speed stirring type continuous mixer is more preferable.

Heat Treatment Step

The heat treatment step is a step in which heat is applied to the mixture discharged from the mixing step to initiate a crosslinking reaction on the surface of the water-absorbent resin powder.

An apparatus for performing the crosslinking reaction is not particularly limited, and a paddle dryer is preferable. The reaction temperature in the crosslinking reaction can be appropriately set according to the type of surface-crosslinking agent to be used, and is preferably from 50°C to 300°C, and more preferably from 100°C to 200°C.

Cooling Step

This cooling step is an optional step provided, as necessary, after the heat treatment step. The apparatus for performing the cooling is not particularly limited and is preferably an apparatus having the same specification as the apparatus used in the heat treatment step, and more preferably a paddle dryer. This is because the heat medium can be changed to a refrigerant and thus used as a cooling apparatus. In the cooling step, the water-absorbent resin particles obtained in the heat treatment step are forcibly cooled, as necessary, to a temperature of preferably from 40°C to 80°C, and more preferably from 50°C to 70°C.

(2-6) Solubilized Polymer-Containing Material Addition Step

In one embodiment of the present invention, a solubilized polymer-containing material addition step is a step of adding the solubilized polymer-containing material in at least one above-described step selected from the aqueous monomer solution preparation step, the polymerization step, the hydrogel-grinding step, the drying step, and the surface-crosslinking step in the production of the water-absorbent resin.

Examples of the method for adding the solubilized polymer-containing material include a method of adding, as is, the solubilized polymer-containing material obtained in the heat treatment step in the method for producing the solubilized polymer-containing material, and a method of dissolving the solubilized polymer-containing material in an aqueous liquid, and then adding the solubilized polymer-containing material as an aqueous solution or as an aqueous dispersion (slurry) in which an undissolved material partially remains.

When the solubilized polymer-containing material is added in the "aqueous monomer solution preparation step", the solubilized polymer-containing material may be mixed into the aqueous monomer solution, or the solubilized polymer-containing material may be mixed with water in advance and then mixed with the monomers (or an aqueous solution thereof). From the viewpoint of uniform mixability of the raw materials, the solubilized polymer-containing material is more preferably mixed into an aqueous monomer solution. When the solubilized polymer-containing material is to be added as is and/or is to be added as an aqueous solution or an aqueous dispersion (slurry), the solubilized polymer-containing material and/or the aqueous solution or aqueous dispersion (slurry) of the solubilized polymer-containing material may be heated to 50°C or higher and then added.

When the solubilized polymer-containing material is added in the "polymerization step", the solubilized polymer-containing material may be added as is or as an aqueous solution or an aqueous dispersion of the solubilized polymer-containing material either before the start of polymerization or after the start of polymerization. From the viewpoint of uniformity of the polymer component, adding the solubilized polymer-containing material before the start of polymerization is preferable.

When the solubilized polymer-containing material is added in the "gel-grinding step", the solubilized polymer-containing material may be added as is or as an aqueous solution or an aqueous dispersion of the solubilized polymer-containing material either before grinding or during grinding. The solubilized polymer-containing material may also be divided and added in several parts. From the viewpoint of uniformity of the gel component, the solubilized polymer-containing material is more preferably added before the gel-grinding.

When the solubilized polymer-containing material is added in the "drying step", the solubilized polymer-containing material (as is, or as an aqueous solution or an aqueous dispersion of the solubilized polymer-containing material) may be mixed before drying, or the particulate hydrogel may be dried without being mixed with the solubilized polymer-containing material, after which solubilized polymer-containing material may be mixed into the particulate hydrogel.

When the solubilized polymer-containing material is added in the "surface-crosslinking step", a water-absorbent resin dried in advance and the solubilized polymer-containing material (as is, or as an aqueous solution or aqueous dispersion of the solubilized polymer-containing material) may be mixed, or the dried water-absorbent resin may be subjected to a surface-crosslinking treatment without mixing the solubilized polymer-containing material therewith after forming a surface-crosslinking layer, and then the solubilized polymer-containing material may be mixed in. From the viewpoint of achieving a uniform mixing property of the surface-treated liquid and the water-absorbent resin, it is more preferable to use the solubilized polymer-containing material in the form of a powder and handle the entire material in powder form.

The proportion of the solubilized polymer-containing material in the total mass of the water-absorbent resin raw material is from 1 mass% to 60 mass%, preferably from 1 mass% to 50 mass%, more preferably from 1 mass% to 40 mass%, and still more preferably from 1 mass% to 30 mass%. In other words, the usage amount of the solubilized polymer-containing material as a raw material in relation to the entire water-absorbent resin raw material is preferably from 1 mass% to 60 mass%, more preferably from 1 mass% to 50 mass%, even more preferably from 1 mass% to 40 mass%, and still more preferably from 1 mass% to 30 mass%.

In all of the above methods of addition, at least some of the solubilized polymer-containing material can be crosslinked and used as a crosslinked polymer.

According to the method for producing a water-absorbent resin of one embodiment of the present invention, a water-absorbent resin can be produced that is less susceptible to a decrease in water absorption performance and discoloration due to the solubilized polymer-containing material that is added.

(2-7) Physical Properties of Water-Absorbent Resin

Centrifuge Retention Capacity (CRC)

In one embodiment of the present invention, the absorption capacity without pressure (centrifuge retention capacity: CRC) of the water-absorbent resin obtained by the water-absorbent resin production method described above is preferably 20.0 g/g or greater, more preferably 25.0 g/g or greater, and still more preferably 28.0 g/g or greater. A higher upper limit of the CRC is preferable, but from the viewpoint of balance with other physical properties, the CRC is preferably 50.0 g/g or less, and more preferably 45.0 g/g or less.

In the present specification, the CRC is a value that is determined by the method described in the Examples section below.

Absorbency Against Pressure of 0.3 psi (AAP 0.3)

In one embodiment of the present invention, the absorption capacity against a pressure of 0.3 psi (AAP 0.3) of the water-absorbent resin obtained by the method for producing a water-absorbent resin is preferably 20.0 g/g or greater, more preferably 21.0 g/g or greater, and even more preferably 24.0 g/g or greater. The upper limit of the AAP 0.3 is not particularly limited, but is preferably 35.0 g/g or less from the viewpoint of the balance with other physical properties.

In the present specification, the AAP 0.3 is a value that is determined by the method described in the Examples section below.

Yellowness Index (YI) Value

In one embodiment of the present invention, the YI value of the water-absorbent resin obtained by the method for producing a water-absorbent resin is preferably 16 or less, and more preferably 14 or less.

Examples

The present invention will be described more specifically according to the following examples and comparative examples, but the present invention is not limited thereto. Examples obtained by appropriately combining the technical means disclosed in each example are also included in the scope of the present invention.

Measurement and Evaluation Methods

(a) Amount of Water-Soluble Content

The amount of the water-soluble content of the solubilized polymer-containing material and the amount of the water-soluble content of the water-absorbent resin (A) serving as a raw material of the solubilized polymer-containing material were determined by the following method.

An amount of 200.0 g of a 0.90 mass% aqueous sodium chloride solution was weighed into a glass container having a volume of 250 ml and containing a cylindrical rotator having a length of 35 mm and a cross-sectional diameter of 7.5 mm, after which 1.00 g of a solubilized polymer-containing material or water-absorbent resin (A) was added to the aqueous sodium chloride solution, and the container was covered with a plastic wrap. Subsequently, the aqueous solution to which was added the solubilized polymer-containing material or the water-absorbent resin (A) was stirred for 16 hours (rotational speed of 500 rpm) using the cylindrical rotator. Through the above operation, a water-soluble component in the solubilized polymer-containing material or the water-absorbent resin (A) was extracted.

After the completion of stirring, the aqueous solution as an extract was filtered through one sheet of filter paper (available from ADVANTEC Toyo Kaisha, Ltd., product name: JIS P3801, No. 2, thickness of 0.26 mm, retention particle size of 5 $\mu$m), and 50.0 g of the obtained filtrate was used as a measurement liquid.

Subsequently, the measurement liquid was titrated with a 0.1N NaOH aqueous solution until the pH reached 10, and was then titrated with a 0.1N HCl aqueous solution until the pH reached 2.7. The titers at this time were determined as [NaOH] ml and [HCl] ml, respectively.

Further, the same operation was carried out using only 200.0 g of the 0.90 mass% aqueous sodium chloride solution without adding the solubilized polymer-containing material or the water-absorbent resin (A), and blank titers ([b1NaOH] ml and [b1HCl] ml) were determined.

The amount of the water-soluble content was calculated from the titers and the monomer average molecular weight according to the following Formula 5).

Water-soluble content amount (mass%) = 0.1 × monomer average molecular weight × 200 × 100 × ([HCl] - [b1HCl]) / 1000 / 1.0 / 50.0 / (solid content concentration (mass%) of solubilized polymer-containing material or water-absorbent resin (A) / 100)       Formula 5

When the monomer average molecular weight was unknown, the monomer average molecular weight was calculated using the rate of neutralization calculated by the following Formula 6).

$$\text{Rate of neutralization (mol\%)} = \{1 - ([\text{NaOH}] - [\text{b1NaOH}]) / ([\text{HCl}] - [\text{b1HCl}])\} \times 100$$

$$\cdots \quad \text{Formula 6)}$$

(b) Water-Soluble Content Increase Amount

The amount of increase in the water-soluble content was calculated according to the following Formula 1), from the amount of the water-soluble content of the solubilized polymer-containing material (Extr. C), and amount of the water-soluble content of the water-absorbent resin (Extr. A), which is a raw material of the solubilized polymer-containing material.

$$\text{Water-soluble content increase amount (mass\%)} = (\text{Extr. C}) - (\text{Extr. A}) \quad \cdots \quad \text{Formula 1)}$$

(C) Solid Content Concentration of Solubilized Polymer-Containing Material

An amount of Wa (g) of a solubilized polymer-containing material obtained in the examples and comparative examples was placed on an aluminum dish having a mass Wb (g), and then dried in a hot air-circulating oven at 180°C for 3 hours. Subsequently, the total mass Wc (g) of the solubilized polymer-containing material and the aluminum dish was measured. The solid content concentration of the solubilized polymer-containing material was then calculated according to the following Formula 7).

$$\text{Solid content concentration (mass\%) of solubilized polymer-containing material} =$$

$$(W_c - W_b) / W_a \times 100 \quad \cdots \quad \text{Formula 7)}$$

(d) Evaluation of Discoloration of Solubilized Polymer-Containing Material (Yellowness Index (YI))

Discoloration of the solubilized polymers of the solubilized polymer-containing materials obtained in the examples and comparative examples was evaluated using a spectrophotometer (Spectrophotometer SE7700) available from Nippon Denshoku Industries Co., Ltd. Reflection measurement was selected as a measurement setting condition, and the measurement diameter was LAV (28 mm). In addition, a 35 $\varphi \times$ 15 H round cell and a 35 $\varphi \times$ 15 H cell case included as accessories, and a standard white board for powder were used. The YI value (yellowness index) was measured with the spectrophotometer under conditions including room temperature (from 20°C to 25°C) and a humidity of 50% RH.

(e) Molecular Weight of Water-Soluble Content

The molecular weight of the water-soluble content was measured according to the following procedure.

Preparation of Measurement Sample

The solubilized polymer-containing material obtained in each of examples and comparative examples was dissolved in the following solvent to prepare a solution containing the solubilized polymer-containing material at a concentration of 0.1 mass%. Subsequently, the obtained solution was passed through a filter (GL Chromatodisk, available from GL Sciences Inc., water based 25A, pore diameter of 0.2 $\mu$m) to produce a measurement sample.
Solvent: Aqueous solution containing 60 mM of sodium dihydrogen phosphate dihydrate, 20 mM of disodium hydrogen phosphate dodecahydrate, and 400 ppm of sodium azide (pH from 6.35 to 6.38)

Gel Permeation Chromatograph (GPC) Measurements

The prepared measurement samples were each subjected to GPC measurements under the following measurement conditions using the Viscotek TDAmax available from Malvern Panalytical Ltd.
The measurement device was equipped with a size exclusion chromatograph, a refractive index detector, a light scattering detector, and a capillary viscometer. The measurement device and measurement conditions were as follows.
Pump and autosampler: Viscotek GPCmax (available from Malvern Panalytical Ltd.)
Guard column: OHpak SB-G (available from Showa Denko K.K.)
Column: Two columns of OHpak SB-806MHQ (available from Showa Denko K.K.) connected in series
Detector: Viscotek TDAmax (available from Malvern Panalytical Ltd.)
Solvent: Aqueous solution containing 60 mM of sodium dihydrogen phosphate dihydrate, 20 mM of disodium hydrogen phosphate dodecahydrate, and 400 ppm of sodium azide (pH from 6.35 to 6.38)
Flow rate: 0.5 ml/min
Injection volume: 100 $\mu$l

Pure water from which impurities were sufficiently removed was used as the water used in the GPC measurements. Moreover, the GPC measurements were carried out in a state in which the baseline of the detector was stable, and in particular, in a state in which there was no noise peak in the light scattering detector.
The measurement device was calibrated using polyoxyethylene glycol (mass average molecular weight (Mw): 21966, molecular weight distribution (Mw/Mn): 1.0, differential refractive index (dn/dc): 0.132, solvent refractive index: 1.33) as a standard sample.
The measurements were each carried out with the differential refractive index (dn/dc) of the solubilized polymer to be measured set to 0.12 and the solvent refractive index set to 1.33. Data on the refractive index, light scattering intensity, and viscosity was collected and analyzed using software (Viscotek OmniSEC 4.7.0 (trade name)).
The mass average molecular weight (Mw), the number average molecular weight (Mn), and the molecular weight distribution (Mw/Mn) of the water-soluble content was calculated on the basis of the refractive index (RI) and light scattering intensity (angle: 7°) (LALS) obtained in the above measurements and data obtained from a viscometer (DP).

(f) Evaluation of Coarse Particles

The solubilized polymer-containing material was passed through a JIS standard sieve having a mesh size of 2.0 cm, and the presence or absence of coarse particles remaining on the sieve was visually confirmed.

(g) CRC

"CRC" is an abbreviation for "centrifuge retention capacity", and the CRC of the water-absorbent resin indicates an absorption capacity of the water-absorbent resin with regard to a 0.90 mass% aqueous sodium chloride solution under no pressure for 30 minutes.

Specifically, 0.200 g of a water-absorbent resin was uniformly placed in a bag (85 mm $\times$ 60 mm) made of a nonwoven fabric (trade name: Heatron Paper, model: GSP-22, available from Nangoku Pulp Industry Co., Ltd.) and heat-sealed, and was then immersed in a large excess (usually about 500 ml) of the 0.90 mass% aqueous sodium chloride solution at room temperature. After the lapse of 30 minutes, the bag was removed from the solution and drained for 3 minutes using a centrifuge (available from Kokusan Co., Ltd., centrifuge model H-122) at the centrifugal force (250 G) described in Edana ABSORBENCY II 441.1-99, after which the mass W1 (g) of the bag was measured. The same operation was carried out without using the water-absorbent resin, and the mass WO (g) of the bag at that time was measured. From these mass values W1 and WO, the centrifuge retention capacity (CRC) (g/g) was calculated according to Formula (8) below.

$$CRC\ (g/g) = (W1 - W0) / 0.2 - 1 \quad \cdots \quad \text{Formula 8)}$$

(h) AAP 0.3

"AAP" is an abbreviation for "absorption against pressure", and the AAP of the water-absorbent resin indicates the absorption capacity under pressure with respect to a 0.90 mass% aqueous sodium chloride solution.

The AAP 0.3 was measured in accordance with the Nonwovens Standard Procedure NWSP 242.0.R2(15) with the exception that the pressurization condition was changed from 0.7 psi to 0.3 psi. Specifically, 0.9 g of a water-absorbent composition was swollen under a pressure of 2.07 kPa (21 g/cm$^2$, 0.3 psi) for 1 hour using a large excess of the 0.9 mass% aqueous sodium chloride solution, and then the AAP (absorption capacity under pressure) (units: g/g) was measured.

(i) Evaluation of Discoloration of Water-Absorbent Resin (Yellowness Index (YI) Value)

Discoloration of the water-absorbent resin produced using, as a portion of the raw material, a solubilized polymer-containing material produced by heat-treating a water-absorbent resin was evaluated using a spectrophotometer (Spectrophotometer SE7700) available from Nippon Denshoku Industries Co., Ltd. Reflection measurement was selected as a measurement setting condition, and the measurement diameter was LAV (28 mm). In addition, a 35 $\varphi$ $\times$ 15 H round cell and a 35 $\varphi$ $\times$ 15 H cell case included as accessories, and a standard white board for powder were used. The YI value (yellowness index) was measured with the spectrophotometer under conditions including room temperature (from 20°C to 25°C) and a humidity of 50% RH.

Production Example 1

An aqueous monomer solution (1) containing acrylic acid, a 48.5 mass% aqueous sodium hydroxide solution, ion-exchanged water, polyethylene glycol diacrylate (molecular weight: 523) as an internal crosslinking agent, and diethylenetriamine-penta-acetic acid trisodium as a chelating agent was prepared. The monomer concentration of the aqueous monomer solution (1) was 43 mass%, and the rate of neutralization was 73 mol%. The addition amounts of the internal crosslinking agent and the chelating agent relative to the monomers were 0.04 mol% and 50 ppm by mass, respectively.

Next, the aqueous monomer solution (1) was heated, and when the solution temperature reached 95°C, 0.1 mol% of sodium persulfate relative to the monomers was added as a polymerization initiator, and the components were mixed. Next, the obtained mixture was poured into a stainless steel vat-type container in an open-air system. After approximately 30 seconds, the polymerization reaction started, and the polymerization reaction proceeded with the polymer expanding and foaming in all directions while generating water vapor. Subsequently, the polymer then shrunk to a size slightly larger than the vat-type container, and a sheet-shaped crosslinked hydrogel polymer (1) was obtained.

The sheet-shaped crosslinked hydrogel polymer (1) obtained in the above operation was subjected to gel-grinding using a meat chopper, and thereby a particulate crosslinked hydrogel polymer (1) was obtained. Subsequently, the particulate crosslinked hydrogel polymer (1) was dried at 180°C for 40 minutes, then pulverized with a roll mill, and classified with JIS standard sieves having mesh sizes of 850 μm and 150 μm, and thereby a water-absorbent resin (1) was obtained.

The obtained water-absorbent resin (1) had a content of 90 mass% or more of particles having a particle size from 150 μm to less than 850 μm, and the mass-average particle size (D50) was 380 μm, the CRC was 48 g/g, the solid content concentration was 94.9 mass%, and the amount of water-soluble content was 23 mass%.

Production Example 2

A surface-crosslinking agent solution containing 0.04 parts by mass of ethylene glycol diglycidyl ether, 0.9 parts by mass of propylene glycol, and 3 parts by mass of water was added to 100 parts by mass of the water-absorbent resin (1) obtained in Production Example 1, the contents were mixed, and a mixture (2) was obtained. The obtained mixture (2) was then heat-treated at 210°C for 40 minutes, and a water-absorbent resin (2) was thereby obtained.

The obtained water-absorbent resin (2) had a content of 90 mass% or more of particles having a particle size from 150 μm to less than 850 μm, and the mass-average particle size (D50) was 400 μm, the CRC was 39.5 g/g, the solid content concentration was 94.5 mass%, and the amount of water-soluble content was 20 mass%.

Production Example 3

0.44 parts by mass of polyethylene glycol diacrylate (molecular weight: 523) was dissolved in 550 parts by mass of a 38 mass% aqueous sodium acrylate solution (rate of neutralization: 71 mol%) to prepare a reaction liquid. The reaction liquid was then degassed for 30 minutes under a nitrogen gas atmosphere.

Next, the reaction liquid was supplied to a jacketed stainless steel double-arm kneader reactor having two sigma blades and a lid for opening and closing the reactor, after which the inside of the reaction vessel was purged with nitrogen gas while the temperature of the reaction liquid was maintained at 30°C.

Subsequently, while the reaction liquid was stirred, 0.24 parts by mass of ammonium persulfate and 0.012 parts by mass of L-ascorbic acid were added to the reaction vessel, and a polymerization reaction started after about 1 minute. The polymerization reaction proceeded within a temperature range of from 20°C to 95°C, and the polymerization reaction was stopped after approximately 60 minutes from the startup of the polymerization, and thereby a crosslinked hydrogel polymer (3) was obtained.

The crosslinked hydrogel polymer (3) obtained by the above operation was hot-air dried at 150°C for 100 minutes, after which the dried polymer was pulverized using a vibrating mill, and further classified with JIS standard sieves having mesh sizes of 850 μm and 106 μm, and thereby a water-absorbent resin (3) was obtained.

The obtained water-absorbent resin (3) had a content of 90 mass% or more of particles having a particle size from 150 μm to less than 850 μm, and the mass-average particle size (D50) was 400 μm, the CRC was 48 g/g, the solid content concentration was 94.6 mass%, and the amount of water-soluble content was 23 mass%.

Example 1-1

To 100 parts by mass of the water-absorbent resin (1) obtained in Production Example 1, 2.0 parts by mass of hydrogen peroxide ($H_2O_2$) and 6.0 parts by mass of water were added, and the contents were mixed using a Lodige mixer. The entire amount of a mixture (B) obtained by the above operation was placed in a SUS container equipped with a stirrer, and heat-treated while stirring for 30 minutes. The container was heated in an oil bath, and the temperature of the contents of the container was controlled to 190°C, and the atmospheric dew point (dew point of the gas phase portion in the heat treatment device) was controlled to 90°C. The atmospheric dew point was controlled by using a device for automatically controlling the mixing amount of steam and air so as to maintain the dew point setting.

Through the above operation, a solubilized polymer-containing material (1) of the water-absorbent resin (1) was obtained. The obtained solubilized polymer-containing material (1) had a water-soluble content increase amount of 74 mass%, a YI value of 14, no coarse particles, a solid content concentration of 97.6 mass%, a mass average molecular weight (Mw) of the water-soluble content of 210000, and Mw/Mn of 3.6.

Example 1-2

A solubilized polymer-containing material (2) of the water-absorbent resin (1) was obtained by carrying out the same operation as in Example 1-1 with the exception that the temperature of the contents in the SUS container was changed to 160°C. The obtained solubilized polymer-containing material (2) had a water-soluble content increase amount of 76 mass%, a YI value of 13, no coarse particles, a solid content concentration of 97.1 mass%, a mass average molecular weight (Mw) of the water-soluble content of 150000, and Mw/Mn of 3.2.

Example 1-3

A solubilized polymer-containing material (3) of the water-absorbent resin (1) was obtained by carrying out the same operation as in Example 1-1 with the exception that the atmospheric dew point of the space portion of the SUS container was changed to 70°C. The obtained solubilized polymer-containing material (3) had a water-soluble content increase amount of 73 mass%, a YI value of 14, no coarse particles, a solid content concentration of 98.0 mass%, a mass average molecular weight (Mw) of the water-soluble content of 230000, and Mw/Mn of 4.0.

Example 1-4

A solubilized polymer-containing material (4) of the water-absorbent resin (1) was obtained by carrying out the same operation as in Example 1-1 with the exception that the atmospheric dew point of the space portion of the SUS container was changed to 50°C. The obtained solubilized polymer-containing material (4) had a water-soluble content increase amount of 72 mass%, a YI value of 15, no coarse particles, a solid content concentration of 98.0 mass%, a mass average molecular weight (Mw) of the water-soluble content of 240000, and Mw/Mn of 4.9.

Example 1-5

A solubilized polymer-containing material (5) of the water-absorbent resin (1) was obtained by carrying out the same operation as in Example 1-1 with the exception that the heat treatment was carried out without stirring. The obtained solubilized polymer-containing material (5) had a water-soluble content increase amount of 76 mass%, a YI value of 12, coarse particles, a solid content concentration of 94.0 mass%, a mass average molecular weight (Mw) of the water-soluble content of 530000, and Mw/Mn of 4.0.

Example 1-6

A solubilized polymer-containing material (6) of the water-absorbent resin (1) was obtained by carrying out the same operation as in Example 1-1 with the exception that the atmospheric dew point of the space portion of the SUS container was changed to 9°C. The obtained solubilized polymer-containing material (6) had a water-soluble content increase amount of 69 mass%, a YI value of 18, no coarse particles, a solid content concentration of 98.2 mass%, a mass average molecular weight (Mw) of the water-soluble content of 250000, and Mw/Mn of 5.6.

Example 1-7

A solubilized polymer-containing material (7) of the water-absorbent resin (1) was obtained by carrying out the same operation as in Example 1-1 with the exception that the temperature of the contents in the SUS container was changed to 120°C. The obtained solubilized polymer-containing material (7) had a water-soluble content increase amount of 57 mass%, a YI value of 8, no coarse particles, a solid content concentration of 96.5 mass%, a mass average molecular weight (Mw) of the water-soluble content of 800000, and Mw/Mn of 2.7.

Example 1-8

A solubilized polymer-containing material (8) of the water-absorbent resin (1) was obtained by carrying out the same operation as in Example 1-1 with the exception that the usage amount of hydrogen peroxide was changed from 2.0 parts by mass to 4.0 parts by mass, and the usage amount of water was changed from 6.0 parts by mass to 10.5 parts by mass. The obtained solubilized polymer-containing material (8) had a water-soluble content increase amount of 74 mass%, a YI value of 12, coarse particles, a solid content concentration of 97.8 mass%, a mass average molecular weight (Mw) of the water-soluble content of 80000, and Mw/Mn of 3.0.

Example 1-9

A solubilized polymer-containing material (9) of the water-absorbent resin (1) was obtained by carrying out the same operation as in Example 1-1 with the exception that the usage amount of hydrogen peroxide was changed from 2.0 parts by mass to 0.5 parts by mass. The obtained solubilized polymer-containing material (9) had a water-soluble content increase amount of 69 mass%, a YI value of 14, no coarse particles, a solid content concentration of 97.4 mass%, a mass average molecular weight (Mw) of the water-soluble content of 540000, and Mw/Mn of 2.5.

Example 1-10

A solubilized polymer-containing material (10) of the water-absorbent resin (1) was obtained by carrying out the same operation as in Example 1-1 with the exception that the temperature of the contents in the SUS container was changed to 100°C. The obtained solubilized polymer-containing material (10) had a water-soluble content increase amount of 9 mass%, a YI value of 10, no coarse particles, a solid content concentration of 90.5 mass%, a mass average molecular weight (Mw) of the water-soluble content of 830000, and Mw/Mn of 3.0.

Example 1-11

A solubilized polymer-containing material (11) of the water-absorbent resin (2) was obtained by carrying out the same operation as in Example 1-1 with the exception that the water-absorbent resin (1) obtained in Production Example 1 was changed to the water-absorbent resin (2) obtained in Production Example 2. The obtained solubilized polymer-containing material (11) had a water-soluble content increase amount of 68 mass%, a YI value of 14, no coarse particles, a solid content concentration of 97.5 mass%, a mass average molecular weight (Mw) of the water-soluble content of 240000, and Mw/Mn of 3.5.

Example 1-12

A solubilized polymer-containing material (12) of the water-absorbent resin (3) was obtained by carrying out the same operation as in Example 1-1 with the exception that the water-absorbent resin (1) obtained in Production Example 1 was changed to the water-absorbent resin (3) obtained in Production Example 3. The obtained solubilized polymer-containing material (12) had a water-soluble content increase amount of 73 mass%, a YI value of 13, no coarse particles, a solid content concentration of 97.5 mass%, a mass average molecular weight (Mw) of the water-soluble content of 230000, and Mw/Mn of 3.3.

Example 1-13

A solubilized polymer-containing material (13) of the water-absorbent resin (2) was obtained by carrying out the same operation as in Example 1-1 with the exception that the water-absorbent resin (1) obtained in Production Example 1 was changed to the water-absorbent resin (2) obtained in Production Example 2, and the usage amount of hydrogen peroxide was changed from 2.0 parts by mass to 0.01 parts by mass. The obtained solubilized polymer-containing material (13) had a water-soluble content increase amount of 4 mass%, a YI value of 12, no coarse particles, a solid content concentration of 97.6 mass%, a mass average molecular weight (Mw) of the water-soluble content of 380000, and Mw/Mn of 3.6.

Comparative Example 1-1

A solubilized polymer-containing material (C1) of the water-absorbent resin (A) was obtained by carrying out the same operation as in Example 1-1 with the exception that the 2.0 parts by mass of hydrogen peroxide was changed to 2.0 parts by mass of sodium persulfate (NaPS). The obtained solubilized polymer-containing material (C1) had a water-soluble content increase amount of -1 mass%, a YI value of 20, no coarse particles, a solid content concentration of 97.3 mass%, a mass average molecular weight (Mw) of the water-soluble content of 470000, and Mw/Mn of 4.0. The amount of water-soluble content decreased between before and after the reaction, and the product could not be solubilized.

Comparative Example 1-2

A solubilized polymer-containing material (C2) of the water-absorbent resin (1) was obtained by carrying out the same operation as in Example 1-1 with the exception that the usage amount of water was changed from 6.0 parts by mass to 100.0 parts by mass, the temperature of the contents in the SUS container was changed to 100°C, and the heat treatment was carried out without stirring. The obtained solubilized polymer-containing material (C2) had a water-soluble content increase amount of 22 mass%, a YI value of 11, coarse particles, a solid content concentration of 55.0 mass%, a mass average molecular weight (Mw) of the water-soluble content of 780000, and Mw/Mn of 2.9. Further, particles of the solubilized polymer-containing material (C2) were integrated in a rice cake-like state, and the handling properties significantly deteriorated.

Comparative Example 1-3

A solubilized polymer-containing material (C3) of the water-absorbent resin (1) was obtained by carrying out the same operation as in Example 1-1 with the exception that the temperature of the contents of the SUS container was changed to 50°C, and the atmospheric dew point of the space portion of the SUS container was changed to 9°C. The obtained solubilized polymer-containing material (C3) had a water-soluble content increase amount of 0 mass%, a YI value of 14, no coarse particles, a solid content concentration of 89.1 mass%, a mass average molecular weight (Mw) of the water-soluble content of 450000, and Mw/Mn of 3.7. Furthermore, there was no change in the amount of the water-soluble content between before and after the heat treatment, and the solubilized polymer-containing material (C3) could not be solubilized.

Summary

The heat treatment conditions and the evaluation results of the solubilized polymer-containing materials of Examples [1-1] to [1-13] and Comparative Examples [1-1] to [1-3] are presented in Tables 1 and 2.

[Table 1]

| | Mixture | | | | | Heat treatment conditions | | |
|---|---|---|---|---|---|---|---|---|
| | Water-absorbent resin | $H_2O_2$ [mass%/water-absorbent resin] | NaPS [mass%/water-absorbent resin] | Ion-exchanged water [mass%/water-absorbent resin] | Solid content concentration [mass%] | Content temperature [°C] | Atmospheric dew point [°C] | Stirring |
| Example [1-1] | (1) | 2.0 | 0.0 | 6.0 | 87.9 | 190 | 90 | Performed |
| Example [1-2] | (1) | 2.0 | 0.0 | 6.0 | 87.9 | 160 | 90 | Performed |
| Example [1-3] | (1) | 2.0 | 0.0 | 6.0 | 87.9 | 190 | 70 | Performed |
| Example [1-4] | (1) | 2.0 | 0.0 | 6.0 | 87.9 | 190 | 50 | Performed |
| Example [1-5] | (1) | 2.0 | 0.0 | 6.0 | 87.9 | 190 | 90 | Not performed |
| Example [1-6] | (1) | 2.0 | 0.0 | 6.0 | 87.9 | 190 | 9 | Performed |
| Example [1-7] | (1) | 2.0 | 0.0 | 6.0 | 87.9 | 120 | 90 | Performed |
| Example [1-8] | (1) | 4.0 | 0.0 | 10.5 | 82.9 | 190 | 90 | Performed |
| Example [1-9] | (1) | 0.5 | 0.0 | 6.0 | 89.1 | 190 | 90 | Performed |
| Example [1-10] | (1) | 2.0 | 0.0 | 6.0 | 87.9 | 100 | 90 | Performed |
| Example [1-11] | (2) | 2.0 | 0.0 | 6.0 | 87.6 | 190 | 90 | Performed |
| Example [1-12] | (3) | 2.0 | 0.0 | 6.0 | 87.7 | 190 | 90 | Performed |
| Example [1-13] | (2) | 0.01 | 0.0 | 6.0 | 90.0 | 190 | 90 | Performed |
| Comparative Example [1-1] | (1) | 0.0 | 2.0 | 6.0 | 90.0 | 190 | 90 | Performed |
| Comparative Example [1-2] | (1) | 2.0 | 0.0 | 100.0 | 47.0 | 100 | 90 | Not performed |
| Comparative Example [1-3] | (1) | 2.0 | 0.0 | 6.0 | 87.9 | 50 | 9 | Performed |

[Table 2]

| | Solubilized polymer-containing material (C) | | | | | Water-soluble content of solubilized polymer-containing material | |
|---|---|---|---|---|---|---|---|
| | Solid content concentration [mass%] | Water-soluble content amount [mass%] | Water-soluble content increase amount [mass%] | YI value | Coarse particles | Mw | Mw/Mn |
| Example [1-1] | 97.6 | 97 | 74 | 14 | Absent | 210000 | 3.6 |
| Example [1-2] | 97.1 | 99 | 76 | 13 | Absent | 150000 | 3.2 |
| Example [1-3] | 98.0 | 96 | 73 | 14 | Absent | 230000 | 4.0 |
| Example [1-4] | 98.0 | 95 | 72 | 15 | Absent | 240000 | 4.9 |
| Example [1-5] | 94.0 | 99 | 76 | 12 | Present | 530000 | 4.0 |
| Example [1-6] | 98.2 | 92 | 69 | 18 | Absent | 250000 | 5.6 |
| Example [1-7] | 96.5 | 70 | 57 | 8 | Absent | 800000 | 2.7 |
| Example [1-8] | 97.8 | 97 | 74 | 12 | Present | 80000 | 3.0 |
| Example [1-9] | 97.4 | 92 | 69 | 14 | Absent | 540000 | 2.5 |
| Example [1-10] | 90.5 | 32 | 9 | 10 | Absent | 830000 | 3.0 |
| Example [1-11] | 97.5 | 88 | 68 | 14 | Absent | 240000 | 3.5 |
| Example [1-12] | 97.5 | 96 | 73 | 13 | Absent | 230000 | 3.3 |
| Example [1-13] | 97.6 | 24 | 4 | 12 | Absent | 380000 | 3.6 |
| Comparative Example [1-1] | 97.3 | 22 | -1 | 20 | Absent | 470000 | 4.0 |
| Comparative Example [1-2] | 55.0 | 45 | 22 | 11 | Present ("mochi" rice-cake like) | 780000 | 2.9 |
| Comparative Example [1-3] | 89.1 | 23 | 0 | 14 | Absent | 450000 | 3.7 |

As indicated in Tables 1 and 2, the water-soluble content increased in all of the solubilized polymer-containing materials (1) to (13) obtained in Examples [1-1] to [1-13] in which hydrogen peroxide was used as the peroxide and the heat treatment was carried out at a content temperature of from 100°C to 190°C and an atmospheric dew point in a range from 9°C to 90°C. In addition, in Example [1-1] to Example [1-4] and Example [1-6], results were obtained that indicate that the higher the atmospheric dew point during the heat treatment, the higher the amount of increase in the water-soluble content. In addition, the water-soluble content increased in Example [1-1], Example [1-11], Example [1-12], and Example [1-13] regardless of the method for producing the water-absorbent resin.

On the other hand, in Comparative Example [1-1], the solubilized polymer-containing material (C1) obtained by changing the decomposition agent from hydrogen peroxide to sodium persulfate indicated a lower amount of increase in the water-soluble content in comparison to Example [1-1], and results indicated that solubilization did not proceed.

In addition, in Comparative Example [1-2], the solubilized polymer-containing material (C2) obtained by reducing the solid content concentration of the mixture (B) in relation to Example [1-1] exhibited results indicating that the entire solubilized polymer-containing material was viscous and integrated, and the handling properties were significantly deteriorated. Therefore, either the solubilized polymer-containing material (C2) cannot be used as a portion of the raw materials used in the method for producing a water-absorbent resin, or a large amount of energy would be required for use of the material (C2) in the method thereof. Therefore, it was found that an energy-efficient method for producing a water-absorbent resin using the solubilized polymer-containing material (C2) as a portion of the raw materials cannot be provided, and the solubilized polymer-containing material (C2) cannot solve the issues to be addressed by the present invention.

Further, in Comparative Example [1-3], the solubilized polymer-containing material (C3) obtained by lowering the temperature of the contents during the heat treatment to 50°C in comparison with Example [1-1] did not exhibit an increase in the water-soluble content, and the results indicated that solubilization did not proceed.

In addition, it was demonstrated that although coarse particles are generated if stirring is not carried out during the heat treatment, a solubilized polymer-containing material for which the amount of increase in the water-soluble content and the Mw of the water-soluble content are favorable can be obtained. In addition, a material balance loss such as a loss in mass in association with solubilization was not observed in any of the examples and comparative examples.

Reference Example 2-1

In a reaction vessel, 89.8 g of acrylic acid, 166.0 g of ion-exchanged water, 0.36 g of polyethylene glycol diacrylate (molecular weight: 523), and 12.3 g of the solubilized polymer-containing material (1) obtained in Example [1-1] were added, and the contents were stirred for 10 minutes.

Next, the reaction vessel was immersed in an ice bath, and 75.33 g of a 48.5 mass% aqueous sodium hydroxide solution was added little by little with stirring such that the liquid temperature in the reaction vessel did not exceed 30°C. Subsequently, the inside of the reaction vessel was purged with nitrogen gas for 30 minutes.

The reaction vessel was then immersed in a water bath at 50°C, and when the temperature in the reaction vessel reached 30°C, 0.167 g of sodium persulfate and 0.0007 g of L-ascorbic acid were added. A polymerization reaction started about 10 minutes later. The polymerization reaction was continued in that state, and a crosslinked hydrogel polymer (2-1) was extracted after 60 minutes from the start of the polymerization.

The crosslinked hydrogel polymer (2-1) was subjected to gel-grinding with a meat chopper having a die diameter of 7.5 mm, and then dried with hot air at 190°C for 20 minutes. Subsequently, the dried polymer that was obtained was pulverized using a vibration mill, and further classified with JIS standard sieves having mesh sizes of 850 $\mu$m and 150 $\mu$m, and thereby a water-absorbent resin (2-1) was obtained.

A surface-crosslinking agent solution containing 0.030 parts by mass of ethylene glycol diglycidyl ether, 1.0 part by mass of propylene glycol, and 3.0 parts by mass of deionized water was uniformly added and mixed with 100 parts by mass of the obtained water-absorbent resin (2-1), and the mixture was heat-treated at 100°C for 45 minutes. Subsequently, the heat-treated water-absorbent resin was cooled and passed through a JIS standard sieve with a mesh size of 710 $\mu$m, and thereby a surface-crosslinked water-absorbent resin (2-1) was obtained.

The obtained surface-crosslinked water-absorbent resin (2-1) had a CRC of 36.1 g/g, an AAP 0.3 of 28.0 g/g, and a YI value of 13. The results are presented in Table 3.

Reference Example 2-2

A surface-crosslinked water-absorbent resin (2-2) was obtained by carrying out the same operation as in Reference Example 2-1 with the exception that the solubilized polymer-containing material (1) was changed to the solubilized polymer-containing material (8) obtained in Example 1-8. The surface-crosslinked water-absorbent resin (2-2) that was obtained had a CRC of 36.4 g/g, an AAP 0.3 of 26.8 g/g, and a YI value of 13. The results are presented in Table 3.

Reference Example 2-3

A surface-crosslinked water-absorbent resin (2-3) was obtained by carrying out the same operation as in Reference Example 2-1 with the exception that the solubilized polymer-containing material (1) was changed to the solubilized polymer-containing material (11) obtained in Example 1-11. The surface-crosslinked water-absorbent resin (2-3) that was obtained had a CRC of 35.6 g/g, an AAP 0.3 of 27.6 g/g, and a YI value of 14. The results are presented in Table 3.

Reference Example 2-4

A surface-crosslinked water-absorbent resin (2-4) was obtained by carrying out the same operation as in Reference Example 2-1 with the exception that the solubilized polymer-containing material (1) was changed to the solubilized polymer-containing material (12) obtained in Example 1-12. The surface-crosslinked water-absorbent resin (2-4) that was obtained had a CRC of 36.3 g/g, an AAP 0.3 of 27.7 g/g, and a YI value of 13. The results are presented in Table 3.

Reference Example 2-5

A surface-crosslinked water-absorbent resin (2-5) was obtained by carrying out the same operation as in Reference Example 2-1 with the exception that the solubilized polymer-containing material (1) was changed to the solubilized polymer-containing material (13) obtained in Example 1-13. The surface-crosslinked water-absorbent resin (2-5) that was obtained had a CRC of 34.0 g/g, an AAP 0.3 of 26.5 g/g, and a YI value of 14. The results are presented in Table 3.

[Table 3]

| | Solubilized polymer-containing material | Monomers/Solubilized polymer-containing material | CRC [g/g] | AAP 0.3 [g/g] | YI value |
|---|---|---|---|---|---|
| Reference Example [2-1] | Example [1-1] | 90/10 | 36.1 | 28.0 | 13 |
| Reference Example [2-2] | Example [1-8] | 90/10 | 36.4 | 26.8 | 13 |
| Reference Example [2-3] | Example [1-11] | 90/10 | 35.6 | 27.6 | 14 |
| Reference Example [2-4] | Example [1-12] | 90/10 | 36.3 | 27.7 | 13 |
| Reference Example [2-5] | Example [1-13] | 90/10 | 34.0 | 26.5 | 14 |

As presented in Table 3, it is found that the surface-crosslinked water-absorbent resins (2-1) to (2-5) obtained in Reference Examples [2-1] to [2-5] are excellent in CRC and AAP 0.3 with minimal discoloration.

Industrial Applicability

According to the method for producing a solubilized polymer-containing material in accordance with an embodiment of the present invention, a water-absorbent resin can be efficiently decomposed, and a solubilized polymer-containing material having a high solid content concentration can be produced. Therefore, a solubilized polymer-containing material can be produced with high production efficiency, and the energy required for drying can be significantly reduced, and thus the solubilized polymer-containing material can be suitably used for production of a water-absorbent resin. Therefore, the present invention can be suitably used for recycling a water-absorbent resin recovered from a used absorbent article, and is extremely useful.

**Claims**

1. A method for producing a solubilized polymer-containing material, the method comprising a heat treatment step of heat-treating a mixture (B) containing a water-absorbent resin (A), water, and a peroxide under conditions satisfying i) and ii) set forth below:

    i) a solid content concentration of the mixture (B) is 60 mass% or greater, and
    ii) a temperature of the heat treatment is 60°C or higher,

    wherein a mass average molecular weight (Mw) of a water-soluble content of a solubilized polymer-containing material (C) obtained in the heat treatment step is from 30000 to 1000000.

2. The production method according to claim 1, wherein in the heat treatment step, a dew point of a gas phase portion in a heat treatment device is 30°C or higher.

3. The production method according to claim 1, wherein in the heat treatment step, stirring is performed.

4. The production method according to claim 1, wherein the peroxide is a peroxide represented by General Formula (1) set forth below:

$$R-O-OH \qquad (1)$$

where in General Formula (1), R is a hydrogen atom or an aliphatic substituent.

5. The production method according to claim 1, wherein the peroxide is hydrogen peroxide.

6. The production method according to claim 1, wherein Mw/Mn of the water-soluble content of the solubilized polymer-containing material (C) is 6.0 or less.

7. The production method according to claim 1, wherein an amount of increase in the water-soluble content as calculated by Formula 1) set forth below is 5 mass% or greater:

$$\text{water-soluble content increase amount (mass\%)} = (\text{Extr. C}) - (\text{Extr. A}) \quad \cdots \quad \text{Formula 1)}$$

where,

Extr. A is an amount of a water-soluble content of the water-absorbent resin (A), and
Extr. C is an amount of the water-soluble content of the solubilized polymer-containing material (C).

8. The production method according to claim 1, wherein a solid content concentration of the mixture (B) is 80 mass% or greater.

9. The production method according to claim 1, wherein in the heat treatment step, a temperature of the heat treatment is 105°C or higher.

10. The production method according to claim 1, wherein in the method for producing a solubilized polymer-containing material, a solubilized polymer is not generated by electromagnetic waves.

11. A method for producing a water-absorbent resin, the method comprising an addition step of adding the solubilized polymer-containing material (C) obtained by the production method described in any one of claims 1 to 10.

12. A solubilized polymer-containing material, which is a solubilized polymer-containing material (C) obtained by heat-treating a mixture (B) comprising a water-absorbent resin (A), water, and a peroxide,

wherein a solid content concentration of the solubilized polymer-containing material (C) is 60 mass% or greater, and
a mass average molecular weight (Mw) of a water-soluble content of the solubilized polymer-containing material (C) is from 30000 to 1000000.

13. The solubilized polymer-containing material according to claim 12, wherein Mw/Mn of the water-soluble content of the solubilized polymer-containing material (C) is 6.0 or less.

14. The solubilized polymer-containing material according to claim 12, wherein the solubilized polymer-containing material (C) is not obtained by use of electromagnetic waves.

15. The solubilized polymer-containing material according to claim 12, wherein a yellowness index (YI) value of the solubilized polymer-containing material (C) is 20 or less.

# EP 4 741 453 A1

## INTERNATIONAL SEARCH REPORT

International application No.

**PCT/JP2024/017722**

### A. CLASSIFICATION OF SUBJECT MATTER

*C08J 11/16*(2006.01)i; *C08F 8/50*(2006.01)i; *C08J 11/22*(2006.01)i
FI:   C08J11/16; C08J11/22; C08F8/50

According to International Patent Classification (IPC) or to both national classification and IPC

### B. FIELDS SEARCHED

Minimum documentation searched (classification system followed by classification symbols)

C08J11/16; C08F8/50; C08J11/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-544666 A (THE PROCTER AND GAMBLE COMPANY) 20 October 2022 (2022-10-20) | 1-15 |
| A | JP 2023-063315 A (UNI-CHARM CO., LTD.) 09 May 2023 (2023-05-09) | 1-15 |
| A | US 2022/0267559 A1 (THE PROCTER AND GAMBLE COMPANY) 25 August 2022 (2022-08-25) | 1-15 |

☐ Further documents are listed in the continuation of Box C.          ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **18 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2022-544666 | A | 20 October 2022 | US | 2021/0054165 | A1 | |
| | | | | EP | 3783055 | A1 | |
| | | | | CN | 114245811 | A | |
| JP | 2023-063315 | A | 09 May 2023 | EP | 4001354 | A1 | |
| | | | | CN | 114341242 | A | |
| US | 2022/0267559 | A1 | 25 August 2022 | JP | 2024-507776 | A | |
| | | | | EP | 4294870 | A1 | |
| | | | | CN | 116917393 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04317785 A
- JP 2019131789 A
- EP 3783056 A1
- WO 2020213298 A
- US 20080161512 A
- WO 2009123197 A
- US 20080194863 A1
- US 20050215734 A
- US 6241928 B
- US 7265190 B

- US 4893999 A
- US 2005215734 A
- US 6987151 B
- US 6710141 B
- WO 2011126079 A
- WO 2006100300 A
- WO 2011025012 A
- WO 2011025013 A
- WO 2011111657 A
- US 7183456 B